# EUROPEAN PATENT APPLICATION

(11) **EP 4 576 379 A1**
(43) Date of publication of application: **25.06.2025**
(21) Application number: 24836381.4
(22) Date of filing: 05.07.2024
(51) Int. Cl.: H01M 50/342, H01M 50/383, H01M 50/211, H01M 10/658

(54) **BATTERY MODULE**

(30) Priority: 06.07.2023 KR 20230087933; 22.05.2024 KR 20240066698
(71) Applicant: LG Energy Solution, Ltd., Seoul 07335 (KR)
(72) Inventor: KIM, Soo-Youl, Daejeon 34122 (KR); KIM, Kwang-Mo, Daejeon 34122 (KR); JUNG, Hye-Mi, Daejeon 34122 (KR)
(74) Representative: Plasseraud IP
(86) International application number: PCT/KR2024/009598
(87) International publication number: WO 2025/009934

(57) **Abstract**

Disclosed is a battery module with an improved structure so as to ensure safety against thermal events or the like. The battery module includes a cell assembly having a plurality of battery cells stacked one another; a module case configured to accommodate the cell assembly in an inner space and having a venting hole formed therein; and an inner cover member configured to cover a side surface at an inner side of the module case where the venting hole is formed, the inner cover member having an inner rupture portion formed in a part corresponding to the venting hole so that venting gas emitted from the cell assembly is discharged to the venting hole through the inner rupture portion

## Description

### TECHNICAL FIELD

The present application claims priority to Korean Patent Application No. 10-2023-0087933 filed on July 6, 2023 and Korean Patent Application No. 10-2024-0066698 filed on May 22, 2024 in the Republic of Korea, the disclosures of which are incorporated herein by reference.

The present disclosure relates to a battery, and more particularly, to a battery module with reinforced safety, and a battery pack and a vehicle including the battery same.

### BACKGROUND ART

As the demand for portable electronic products such as smart phones, tablet PCs and smart watches is increasing significantly and electric vehicles become increasingly widespread, research is being actively conducted on batteries installed in these vehicles, especially secondary batteries that can be repeatedly charged and discharged.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior. In addition, the can-type secondary batteries may be classified into cylindrical batteries and rectangular batteries according to their shape. Currently, the secondary batteries, especially lithium secondary batteries, may be regarded as having three representative types: pouch type, rectangular type, and cylindrical type.

Secondary batteries are widely used for driving or energy storage not only in small devices such as portable electronic devices but also in medium and large devices such as electric vehicles and energy storage systems (ESS). Moreover, as the electric vehicle-related industry has grown significantly in recent years, interest in batteries, which may be considered a core technology, is growing.

These secondary batteries may constitute one battery module in such a form that a plurality of secondary batteries are electrically connected and are stored together in a module case. Also, a number of these battery modules may be connected to form a single battery pack.

In a battery module to which a conventional battery, such as a pouch-type battery, is applied, if a thermal event such as thermal runaway occurs in one cell provided therein, thermal propagation may occur in which the event is propagated to neighboring cells. In addition, if a plurality of battery modules are included in the battery pack, thermal propagation may also occur between the battery modules. If such thermal propagation occurs between cells and/or modules, problems such as flame exposure, rupture, or explosion may occur in the battery pack due to high thermal energy.

In order to prevent such problems, development of a battery module or battery pack that may ensure high safety against the thermal propagation phenomenon is urgent. In particular, in the conventional art, in order to solve such problems, a technology to prevent hot gas or flame from being propagated between the battery module and the outside by applying a flame cover, etc. to the outer side of the battery module has been applied. However, the structural coupling force between the flame cover attached to the module and the outer side of the module is weak, so there are many cases in which the flame cover is separated. Therefore, with such a conventional technology, there is a problem in that it is difficult to stably secure the flame blocking effect, etc. for the battery module.

### DISCLOSURE

### Technical Problem

The present disclosure is designed to solve the problems of the related art, and therefore the present disclosure is directed to providing a battery module with an improved structure so as to ensure safety from flame, gas, heat, spark, etc. (hereinafter, venting gas) generated inside or outside the battery module, and a battery pack and vehicle including the same.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery module, comprising: a cell assembly having a plurality of battery cells stacked one another; a module case configured to accommodate the cell assembly in an inner space and having a venting hole formed therein; and an inner cover member configured to cover a side surface at an inner side of the module case where the venting hole is formed, the inner cover member having an inner rupture portion formed in a part corresponding to the venting hole so that venting gas emitted from the cell assembly is discharged to the venting hole through the inner rupture portion.

Here, the venting hole may be formed at an upper side of the module case, and the inner cover member may be located at an upper side of the cell assembly.

In addition, the module case may include a U-frame in which a base plate, a left plate, and a right plate are formed integrally, and a top plate coupled to a top of the U-frame.

In addition, the inner rupture portion may be configured in the form of a notch.

In addition, the inner rupture portion may be formed in plurality.

In addition, at least some of the plurality of inner rupture portions may be configured to have different rupture conditions.

In addition, the inner rupture portion may be configured to have different rupture conditions depending on a location in the part corresponding to the venting hole.

In addition, the cell assembly may include a pouch-type cell as the battery cell, and the pouch-type cell may be configured so that a bonding member for maintaining a folding structure of a sealing portion is partially attached to the sealing portion and at least a part of a portion where the bonding member is not attached is positioned corresponding to the inner rupture portion.

In addition, the inner cover member may have a protrusion that protrudes toward the cell assembly.

In addition, the inner cover member may be configured so that that the inner rupture portion is positioned relatively in an outer direction.

In addition, the inner cover member may be formed to have a bent end so that a bending portion is interposed between the cell assembly and the module case.

In addition, the battery module according to the present disclosure may further comprise an outer cover member configured to cover a side surface at an outer side of the module case where the venting hole is formed, the outer cover member having an outer rupture portion provided in the part corresponding to the venting hole.

In addition, the outer rupture portion may be inserted into the venting hole.

In another aspect of the present disclosure, there is also provided a battery pack, comprising the battery module according to the present disclosure.

In still another aspect of the present disclosure, there is also provided a vehicle, comprising the battery module according to the present disclosure.

### Advantageous Effects

According to the present disclosure, the safety of a battery module or a battery pack, or a device including the battery module or the battery pack, such as an electric vehicle or ESS, may be improved.

In particular, according to one embodiment of the present disclosure, thermal runaway propagation between battery cells or between battery modules may be prevented or delayed.

For example, when a thermal runaway situation occurs in one battery cell within a battery module, venting gas (including heat, gas, flame, etc.) may be discharged through a venting hole provided at the top side of the battery module. At this time, the venting gas may be prevented from affecting neighboring cells or neighboring battery modules through convection, radiation, conduction, etc.

Therefore, according to this embodiment of the present disclosure, the effect of blocking or suppressing thermal propagation between neighboring battery cells or between neighboring battery modules may be stably secured.

Furthermore, according to one embodiment of the present disclosure, in a situation where high-pressure venting gas is discharged from a battery cell due to thermal runaway, a cover member may be stably positioned between the battery cell and the module case. Accordingly, as the cover member protects the module case, the problem that the structure of the module case is collapsed due to flame or heat may be prevented. Accordingly, propagation of thermal runaway between the battery cells or the battery modules due to such structural collapse may be more reliably prevented.

The present disclosure may have various other effects in addition to the above, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a schematic perspective view showing a battery module according to an embodiment of the present disclosure.
FIG. 2 is an exploded perspective view showing some components of the battery module according to an embodiment of the present disclosure.
FIG. 3 is a perspective view showing some components of the battery module according to an embodiment of the present disclosure.
FIG. 4 is an enlarged view showing a portion A1 of FIG. 3.
FIGS. 5 and 6 are perspective views schematically showing the configuration of an inner cover member according to different embodiments of the present disclosure.
FIG. 7 is an exploded perspective view schematically showing the configuration of an inner cover member and a top plate according to another embodiment of the present disclosure.
FIGS. 8 and 9 are enlarged perspective views showing a portion in which a venting hole is formed in the battery module according to different embodiments of the present disclosure.
FIG. 10 is an enlarged perspective view showing a portion of a battery module according to still another embodiment of the present disclosure in which a venting hole is formed.
FIG. 11 is a drawing showing a cross-sectional configuration along line A3-A3' of FIG. 10.
FIGS. 12 and 13 are drawings sequentially showing that an inner rupture portion is deformed and ruptured by the pressure of venting gas in the configuration of FIG. 11.
FIG. 14 is an enlarged view showing a portion A6 of FIG. 12.
FIG. 15 is a perspective view schematically showing the configuration of a battery cell equipped in a cell assembly according to an embodiment of the present disclosure.
FIG. 16 is a perspective view showing an inner cover member according to another embodiment of the present disclosure, viewed from the lower side.
FIG. 17 is a partially enlarged cross-sectional view showing that the inner cover member of FIG. 16 is mounted on an upper part of the cell assembly.
FIG. 18 is an enlarged cross-sectional view showing some components of a battery module according to still another embodiment of the present disclosure.
FIG. 19 is a cross-sectional view schematically showing some components of a battery module according to still another embodiment of the present disclosure.
FIG. 20 is a perspective view schematically showing the configuration of a battery module according to still another embodiment of the present disclosure.
FIG. 21 is an enlarged view showing a portion A12 of FIG. 20.
FIG. 22 is an exploded perspective view schematically showing the configuration of a battery module according to still another embodiment of the present disclosure.
FIG. 23 is an enlarged cross-sectional view showing a portion where a venting hole is formed, in a state where the battery module of FIG. 22 is coupled.
FIG. 24 is a schematic view showing some components of a battery module according to still another embodiment of the present disclosure.
FIG. 25 is a schematic view showing some components of a battery module according to still another embodiment of the present disclosure.
FIG. 26 is a partially enlarged schematic view showing that an inner cover member and an outer cover member are deformed due to an increase in internal pressure in the battery module according to an embodiment of the present disclosure.
FIG. 27 is a schematic perspective view showing the configuration of a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Meanwhile, in this specification, terms indicating directions such as "upper", "lower", "left", "right", "front", and "rear" may be used, but these terms are only for convenience of description, it is obvious to those skilled in the art that they may vary depending on the location, displacement, or rotation of a target object or the location of an observer.

In addition, in this specification, various embodiments are included, and any feature that can be applied to different embodiments identically or similarly will not be described in detail, and a feature having a difference for each embodiment will be described in detail.

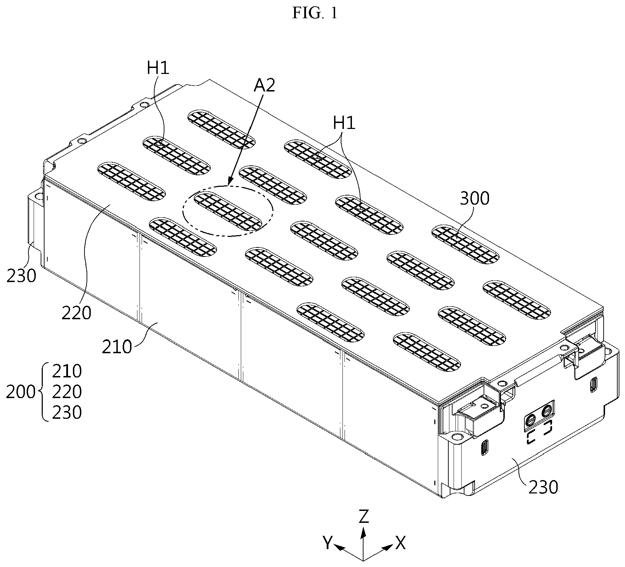

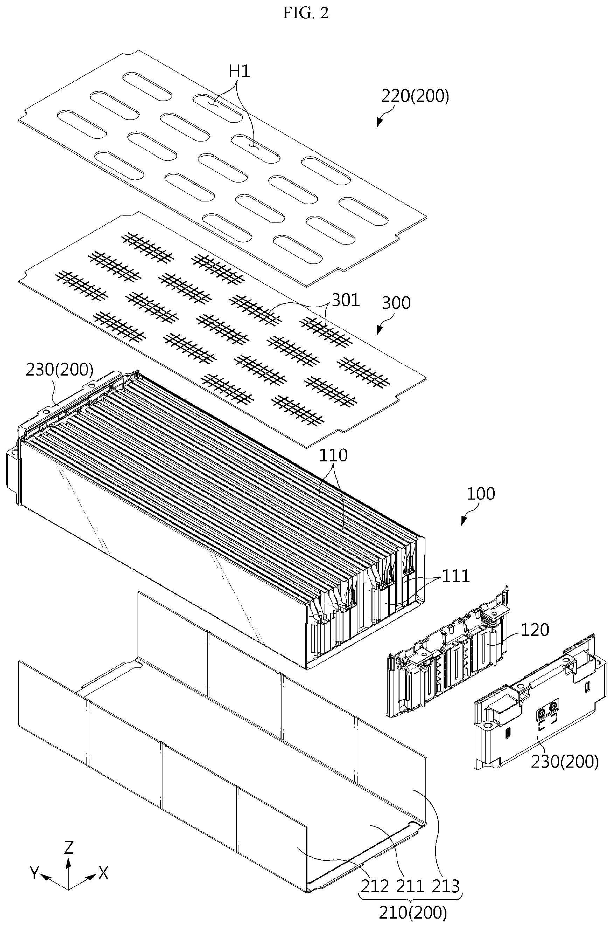

FIG. 1 is a schematic perspective view showing a battery module according to an embodiment of the present disclosure, and FIG. 2 is an exploded perspective view showing some components of the battery module according to an embodiment of the present disclosure.

Referring to FIGS. 1 and 2, the battery module according to the present disclosure includes a cell assembly 100, a module case 200, and an inner cover member 300.

The cell assembly 100 may include at least one battery cell 110, and in particular, a plurality of battery cells 110. Here, each battery cell 110 may mean one secondary battery itself, or may mean a battery group including multiple secondary batteries. This specification will be described based on the case where the battery cell 110 represents one secondary battery.

The battery cell 110, namely each secondary battery, may include an electrode assembly, an electrolyte, and a battery case. At this time, the battery case may be configured to have various shapes, and depending on the shape of the battery case, the battery cell 110 may be classified into a pouch-type cell, a cylindrical cell, a rectangular cell, etc. The types, shapes, structures, etc. of the battery cell 110 are widely known at the time of filing of this application, and thus will not be described in detail. In the present disclosure, various types of secondary batteries known at the time of filing of this application may be applied. In addition, the battery cell 110 may be a lithium secondary battery, but of course, may be various other types of secondary batteries.

In the cell assembly 100, a plurality of battery cells 110 may be stacked one another in at least one direction. For example, a plurality of battery cells 110 may be stacked to be arranged in a horizontal direction, particularly in the left and right direction (X-axis direction), as illustrated in FIG. 2. In addition, the plurality of battery cells 110 provided in the cell assembly 100 may be electrically connected to each other in series and/or in parallel.

Meanwhile, in this specification, unless otherwise stated, the X-axis direction in which a plurality of battery cells 110 are stacked is referred to as a left and right direction, the Y-axis direction, which is a horizontal direction orthogonal to the cell stacking direction, is referred to as a front and rear direction, and the Z-axis direction, which is orthogonal to the X-Y plane, is referred to as an upper and lower direction (vertical direction). Furthermore, the Y-axis direction may be referred to as a longitudinal direction of the cell, in the case where the cell is a pouch-type cell. In addition, the left and right direction, the front and rear direction, and the upper and lower direction may also be expressed as a first direction, a second direction, and a third direction, respectively.

Each battery cell 110 may have an electrode terminal 111. For example, as illustrated in FIG. 2, each pouch-type cell provided in the cell assembly 100 may have an electrode terminal 111 disposed to protrude in the front and rear direction. The electrode terminal 111 may be referred to as an electrode lead, an electrode tab, etc. A plurality of battery cells 110 may be electrically connected to each other in series or in parallel through the electrode terminals 111. In addition, the battery module may further include a bus bar 120, etc. to facilitate connection between the plurality of electrode terminals 111 or to sense an electrical signal from the electrode terminals 111.

The module case 200 may be configured to have an empty space formed therein and accommodate a plurality of cell assemblies 100 in the inner space. For example, the module case 200 may include members for covering the upper, lower, left, right, front, and rear sides of the inner space. In particular, the members for covering each direction may be configured in a plate shape. In addition, the cell assemblies 100 may be positioned in the inner space of the module case 200 defined in this way. The module case 200 may be at least partially made of a metal and/or plastic material. For example, a specific portion of the module case 200 may be made of an aluminum material. In addition, another portion of the module case 200 may be made of a plastic material.

The module case 200 may have a venting hole formed therein, as indicated by H1 in FIGS. 1 and 2. The venting hole H1 may be formed in at least one side of the module case 200 and configured so that the module case 200 passes through the venting hole H1 in the inner and outer direction. Accordingly, the inner space and the outer space of the module case 200 may be communicated through the venting hole H1. In particular, the venting hole H1 may become an outlet through which venting gas, such as a flame, gas, or spark, is discharged when the venting gas is generated from the cell assembly 100 inside the module case 200.

The inner cover member 300 may be positioned at the inner side of the module case 200. That is, the inner cover member 300 may be accommodated in the inner space of the module case 200 together with the cell assembly 100. Furthermore, the inner cover member 300 may be configured to cover a side surface where the venting hole H1 is formed. More specifically, the inner cover member 300 may be positioned in a portion where the venting hole H1 is formed among several spaces between the cell assembly 100 and the module case 200. In other words, the inner cover member 300 may be arranged at the inner side of the side surface where the venting hole H1 is formed in the module case 200.

The inner cover member 300 may include a refractory material. For example, the inner cover member 300 may include a material such as mica, ceramic, or an inorganic material, or may be made of such a material.

The inner cover member 300 may have an inner rupture portion 301. Moreover, the inner rupture portion 301 may be provided at a portion corresponding to the venting hole H1. Accordingly, the inner cover member 300 may be configured such that the inner rupture portion 301 is positioned at a portion where the venting hole H1 is formed in a state where the inner cover member 300 is mounted inside the module case 200, as illustrated in FIG. 1. In this case, when viewing the surface of the module case 200 from the outside of the module case 200, the inner rupture portion 301 may be exposed to the outside through the venting hole H1. When the battery module is in a normal state, the inner rupture portion 301 may be configured in a sealed form. Accordingly, even if the inner rupture portion 301 is exposed through the venting hole H1, the cell assembly 100 located inside the inner rupture portion 301 may not be exposed to the outside through the venting hole H1.

The inner rupture portion 301 may be configured to be ruptured by pressure or heat. In particular, when a thermal event such as thermal runaway occurs in at least one battery cell 110 provided in the cell assembly 100, venting gas may be emitted. In this specification, venting gas may be a broad concept including not only gas discharged from a battery cell due to thermal runaway, but also gas, flame, spark, active material particles, etc. generated from combustion. The inner rupture portion 301 may be configured to be ruptured when such a thermal event occurs in the cell assembly 100. In particular, the inner rupture portion 301 may be configured to be at least partially ruptured by pressure or heat of the venting gas emitted from the cell assembly 100. When the inner rupture portion 301 ruptures, the venting gas emitted from the cell assembly 100 may be discharged to the venting hole H1 through the ruptured portion of the inner rupture portion 301. In this way, the inner cover member 300 may close the venting hole H1 of the module case 200 in a normal state, and may be ruptured during thermal runaway to open the venting hole H1. Therefore, the venting gas emitted from the cell assembly 100 may be discharged to the outside of the module case 200 through the venting hole H1.

According to the embodiment of the present disclosure, thermal propagation between battery modules may be suppressed by the inner cover member 300. For example, even if venting gas containing a flame, etc. is discharged from a specific battery module, since other neighboring battery modules are provided with inner cover member 300 made of a fire-resistant material, it is possible to suppress damage to the cell assemblies 100 inside other battery modules due to heat of the venting gas, etc.

In addition, according to this embodiment of the present disclosure, in a normal state, since the inner cover member 300 closes the venting hole H1, the cell assembly 100 may not be exposed to the outside through the venting hole H1. Accordingly, foreign substances outside the battery module may be prevented from flowing into the cell assembly 100 through the venting hole H1.

In addition, according to this embodiment of the present disclosure, since the inner cover member 300, which protects the module case 200 from venting gas or heat, is positioned inside the module case 200, a coupling force between the inner cover member 300 and the module case 200 may be stably secured.

In particular, even if venting gas discharged from another battery module flows to the outer side of the module case 200, since the inner cover member 300 is located at the inner side of the module case 200, the problem that the coupling force between the inner cover member 300 and the module case 200 is weakened due to the venting gas at the outside may be prevented. Accordingly, the inner cover member 300 may stably maintain its position without being detached from the module case 200 to the outside.

In addition, the effect of preventing detachment of the inner cover member 300 may be secured even for a battery module in which a thermal event has occurred. For example, in a thermal runaway situation, if venting gas is discharged in the outer direction through the venting hole H1, the inner cover member 300 may be strongly pressurized in the outer direction by the venting gas. However, in the configuration of the present disclosure, since the module case 200 is positioned at the outer side of the inner cover member 300, the inner cover member 300 may be continuously supported in the inner direction without being detached in the outer direction.

In addition, according to this embodiment of the present disclosure, structural collapse of the module case 200 in a thermal event situation may be effectively prevented. In particular, when thermal runaway occurs inside the battery module, venting gas and heat may be concentrated in a portion where the venting hole H1 is formed inside the module case 200, so that the corresponding portion may structurally collapse. However, in this embodiment of the present disclosure, the inner cover member 300 made of a fire-resistant material is positioned inside the portion where the venting hole H1 is formed in the module case 200, so the module case 200 may be protected. Accordingly, even in a situation where venting gas is discharged through the venting hole H1, structural collapse of the side surface of the module case 200 where the venting hole H1 is formed may be prevented. Therefore, according to this embodiment of the present disclosure, propagation of thermal runaway between the battery cells 110 or between the battery modules due to structural collapse of the module case 200 may be prevented.

The venting hole H1 may be formed in the upper side of the module case 200, as shown in FIGS. 1 and 2. In this case, the inner cover member 300 may be located at the upper side of the cell assembly 100.

For example, when the module case 200 is formed in an approximately rectangular parallelepiped shape, six side surfaces may be formed in the module case 200. At this time, the venting hole H1 may be formed in the upper surface of the module case 200. In addition, the inner cover member 300 may be located above the cell assembly 100 and below of the upper surface of the module case 200.

In particular, the inner cover member 300 is in the form of a sheet, and may be interposed between the cell assembly 100 and the module case 200. For example, when a plurality of battery cells 110 are stacked in a horizontal direction, the inner cover member 300 may be positioned at the upper portion of the cell assembly 100 in the form of being laid down in the horizontal direction. In this case, it may be regarded that the inner cover member 300 is arranged parallel to the plane (X-Y plane) on which the plurality of battery cells 110 are stacked.

According to this embodiment, the high-temperature venting gas may quickly move to the venting hole H1 at the top and be discharged to the outside. Therefore, at the event of thermal runaway, the venting process of the battery module may be performed more smoothly. In addition, when the electrode terminal 111 of each battery cell 110 or the module terminal of the battery module is located in the front and rear direction in the cell assembly 100, the venting gas may be suppressed from moving to the electrode terminal 111 or the module terminal. Therefore, the module bus bar, etc. provided at the module terminal may be prevented from being damaged by the venting gas.

Also, the module case 200 may include a U-frame 210 and a top plate 220, as illustrated in FIG. 2.

Here, the U-frame 210 may be configured in a form in which three unit sides provided in the module case 200 are integrated with each other. In particular, the U-frame 210 may be configured such that a base plate 211, a left plate 212, and a right plate 213 are integrally formed in the module case 200. That is, the base plate 211, the left plate 212, and the right plate 213 of the U-frame 210 may be manufactured in the form of one plate from the beginning, but may be distinguished from each other through an additional process such as bending. For example, the U-frame 210 may be configured in a way that the left and right ends of one plate laid down in the horizontal direction are vertically bent upward, respectively. The U-frame 210 may be open at the top, the front side, and the rear side.

The top plate 220 may be coupled to the top opening of the U-frame 210. Moreover, the top plate 220 may have left and right ends coupled to the top of the left plate 212 of the U-frame 210 and the top of the right plate 213. In particular, in one embodiment of the present disclosure, the venting hole H1 may be formed in the top plate 220. At this time, the inner cover member 300 may be positioned at the lower portion of the top plate 220.

According to this embodiment of the present disclosure, the assembly efficiency of the battery module may be improved. In particular, according to this embodiment, the assembly process of the battery module may be performed by first inserting the cell assembly 100 into the inner space of the U-frame 210 at the upper portion of the U-frame 210, then mounting the inner cover member 300 to the upper portion of the cell assembly 100, and then mounting the top plate 220 to the upper portion of the inner cover member 300.

According to this assembly process, the process of positioning the inner cover member 300 inside the module case 200 may be easily performed. In particular, in the process of positioning the inner cover member 300 inside the module case 200, the friction or tolerance between the inner surface of the module case 200 and the inner cover member 300 may not be greatly considered. In addition, according to the assembly configuration, by closely contacting the inner cover member 300 and the top plate 220 to minimize the space therebetween, it may also be advantageous for reducing the volume of the battery module.

In this embodiment, the module case 200 may further include an end frame 230, as illustrated in FIG. 2. The end frame 230 may be coupled to open ends at the front and rear sides of the U-frame 210 to close the front and rear sides of the inner space of the module case 200.

In particular, the end frame 230 may be positioned in a direction in which the electrode terminals 111 of each battery cell 110 included in the cell assembly 100 are positioned. In this case, in order to secure insulation for the electrode terminals 111, the end frame 230 may include an electrically insulating material, such as a plastic material.

The components constituting the module case 200, such as the U-frame 210, the top plate 220, and the end frame 230, may be connected to each other in various ways, such as welding, insertion, adhesion, and hooking. In particular, all or some of the components of the module case 200 may be made of or include aluminum in order to have excellent weldability, be advantageous in weight reduction, and stably secure cooling performance.

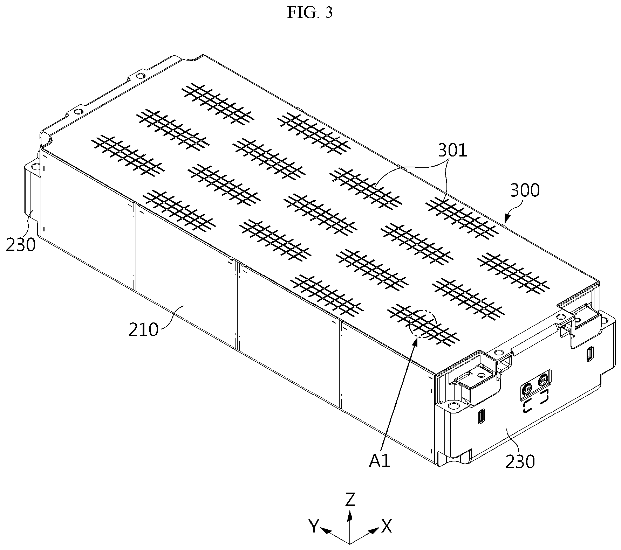

FIG. 3 is a perspective view showing some components of the battery module according to an embodiment of the present disclosure. For example, FIG. 3 may be regarded as showing the embodiment of FIG. 1 in a state where the top plate 220 is removed.

Referring to FIG. 3, the inner cover member 300 may be configured to cover the top of the cell assembly 100. In particular, when the cell assembly 100 is configured in a form in which a plurality of battery cells 110 are stacked in a horizontal direction, the inner cover member 300 may be configured to cover the tops of all battery cells 110 included in the cell assembly 100. In addition, the inner cover member 300 may be configured to have a shape and size that entirely cover the upper side of the inner space defined by the U-frame 210 and the end frame 230. For example, when the inner space defined by the U-frame 210 and the end frame 230 is formed in a rectangular shape when viewed from the upper side, the inner cover member 300 may have a rectangular shape corresponding to this shape. Furthermore, the inner cover member 300 may be configured to have a shape, size, area, etc. that is the same as or similar to that of the top plate 220.

According to this embodiment of the present disclosure, in the portion where the inner cover member 300 is located, the cell assembly 100 or the top plate 220 may be more stably protected from external factors of the battery module as a whole. For example, when venting gas discharged from another battery module flows at the upper outer side of the battery module, more stably protection is possible so that the venting gas does not affect the cell assembly 100 inside the battery module. In particular, thermal damage to the cell assembly 100 inside the battery module or the problem of thermal runaway propagation due to heat of the external venting gas, etc. may be more reliably suppressed. In addition, in this case, the cell assembly 100 inside the battery module may be more reliably protected from foreign substances such as dust or conductors outside the battery module. Also, in this case, the inner surface of the top plate 220 may be protected from venting gas, heat, etc. generated inside the module case 200.

The inner rupture portion 301 may exist in a closed state when the battery module is in a normal state. In this case, external venting gas or foreign substances may be prevented from flowing into the normal battery module through the venting hole H1. In addition, when an abnormal situation such as thermal runaway occurs inside the battery module, the inner rupture portion 301 may be configured to be ruptured so that the internal venting gas may be discharged to the outside. That is, the inner rupture portion 301 may be transformed from a closed state to an open state by heat or venting gas. At this time, the inner rupture portion 301 may be ruptured in various forms so as to be able to penetrate the inner cover member 300 in the inner and outer direction.

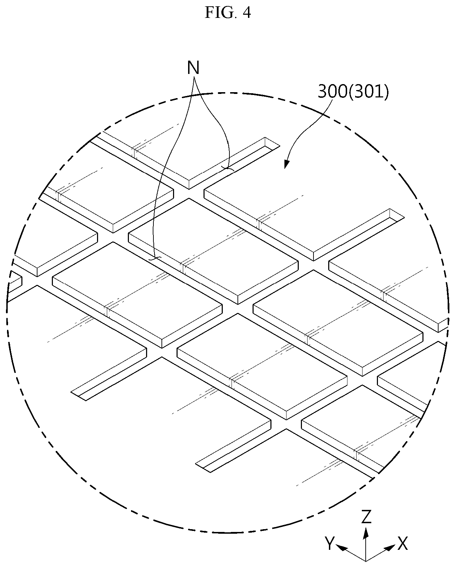

In particular, the inner rupture portion 301 may be configured in a notch shape. This embodiment will be described in more detail with additional reference to FIG. 4.

FIG. 4 is an enlarged view showing a portion A1 of FIG. 3.

Referring to FIGS. 3 and 4, the inner rupture portion 301 may be formed on at least one surface of the inner cover member 300. In particular, the inner rupture portion 301 may be formed in a notch shape that is concavely dug inwardly from the surface of the inner cover member 300, as indicated by N in FIG. 4. For example, when the inner cover member 300 is configured in a sheet shape, the notch-shaped inner rupture portion 301 may be provided in a shape that partially reduces the thickness of the inner cover member 300.

The notch N of the inner rupture portion 301 may be formed in a lattice shape. That is, the inner rupture portion 301 may be configured in a form in which a plurality of notch lines prepared by elongating the concavely dug notch N are formed so that the plurality of notch lines intersect each other. For example, the inner rupture portion 301 may be configured in a form in which at least one notch line extending in the left and right direction and at least one notch line extending in the front and rear direction are orthogonal to each other.

According to this embodiment, the configuration in which the inner rupture portion 301 is rapidly ruptured in the event of thermal runaway, etc. may be more easily achieved. In particular, in this embodiment, in a normal state, the venting hole H1 is stably covered by the inner rupture portion 301, and the inner rupture portion 301 may be rapidly ruptured by the pressure of the venting gas, etc. Furthermore, in this embodiment, when the internal pressure increases, the inner cover member 300 may be deformed more easily by the notch N. Therefore, the inner rupture portion 301 may rupture more easily due to the increase in the internal pressure.

In addition, according to this embodiment, the process of providing the notch N may be performed more easily. Furthermore, according to this embodiment, the process of providing the inner rupture portion 301 with a shape or size corresponding to the venting hole H1 may be easily implemented.

The notch N for forming the inner rupture portion 301 may be provided on the upper surface of the inner cover member 300. For example, as illustrated in FIG. 4, the inner rupture portion 301 may be formed in a downwardly concave shape on the upper surface of the inner cover member 300. In this case, it may be regarded that the notch N is located at the side of the inner cover member 300 facing the venting hole H1. Accordingly, the notch may be exposed to the outside of the module case 200 through the venting hole H1.

According to this embodiment of the present disclosure, when venting gas is emitted from the cell assembly 100 inside the module case 200, the inner rupture portion 301 of the inner cover member 300 may be quickly ruptured by the internal pressure of the venting gas. In the embodiment where the cell assembly 100 is positioned below the inner cover member 300, when the internal pressure increases due to the venting gas, the inner cover member 300 may be pressurized upward from the lower side. In this case, since the notch N is formed on the upper surface of the inner cover member 300, the inner rupture portion 301 may be quickly and smoothly ruptured by the pressurization. Meanwhile, when venting gas is discharged from another battery module and attempts to flow back in through the venting hole H1, the inner cover member 300 may be pressurized downward from the upper side. At this time, since the notch N is not formed on the lower surface of the inner cover member 300, the inner rupture portion 301 may not be easily ruptured by the downward pressure. That is, according to this embodiment, it may be regarded that the inner rupture portion 301 is configured to be easily ruptured by inner pressure (at the lower side) of the inner cover member 300, and not easily ruptured by outer pressure (at the upper side).

The inner rupture portion 301 may be formed in plurality in the inner cover member 300. For example, as illustrated in FIGS. 2 and 3, a plurality of inner rupture portions 301 spaced apart from each other in the horizontal direction may be provided on the surface of the sheet-shaped inner cover member 300. In addition, each inner rupture portion 301 may be formed of a plurality of notch lines.

Furthermore, in one module case 200, a plurality of venting holes H1 may be formed. Also, the inner rupture portion 301 may be formed to correspond to each venting hole H1. For example, the inner rupture portion 301 may be provided to correspond to the venting hole H1 in one-to-one relationship.

According to this embodiment, even if the venting gas is emitted in any portion of the cell assembly 100, the venting gas may be quickly discharged to the outside through the inner rupture portion 301 and the venting hole H1 adjacent thereto.

In particular, the inner cover member 300 may be configured such that at least one inner rupture portion 301 faces all battery cells 110 included in the cell assembly 100. For example, referring to the configuration illustrated in FIG. 2, the cell assembly 100 may include a plurality of battery cells 110 stacked in the left and right direction (X-axis direction). In addition, a plurality of venting holes H1 may also be arranged in the stacking direction (left and right direction) of the battery cells 110. In this case, it may be regarded that at the upper side of all battery cells 110, the inner rupture portions 301 are disposed to directly correspond thereto. Accordingly, even if venting gas is generated in any of the battery cells 110, the venting gas may be smoothly discharged toward the venting hole H1 by rupturing the inner rupture portion 301 directly located thereon. In this embodiment, one inner rupture portion 301 may be arranged to correspond to one or more battery cells 110.

In addition, the inner cover member 300 may be configured such that two or more inner rupture portions 301 are arranged to correspond to one battery cell 110. For example, referring to FIG. 2, each battery cell 110 may be arranged long in the front and rear direction (Y-axis direction) so that the electrode terminals 111 are positioned at the end in the front and rear direction (Y-axis direction). At this time, two or more inner rupture portions 301 may also be arranged in the front and rear direction.

When looking at one battery cell 110, it is difficult to accurately predict where the venting gas will be generated. Therefore, by arranging two or more inner rupture portions 301 to correspond to one battery cell 110 as in this embodiment, even if the venting gas is emitted in any portion of the battery cell 110, the venting gas may be quickly discharged through the inner rupture portion 301 that is as close as possible.

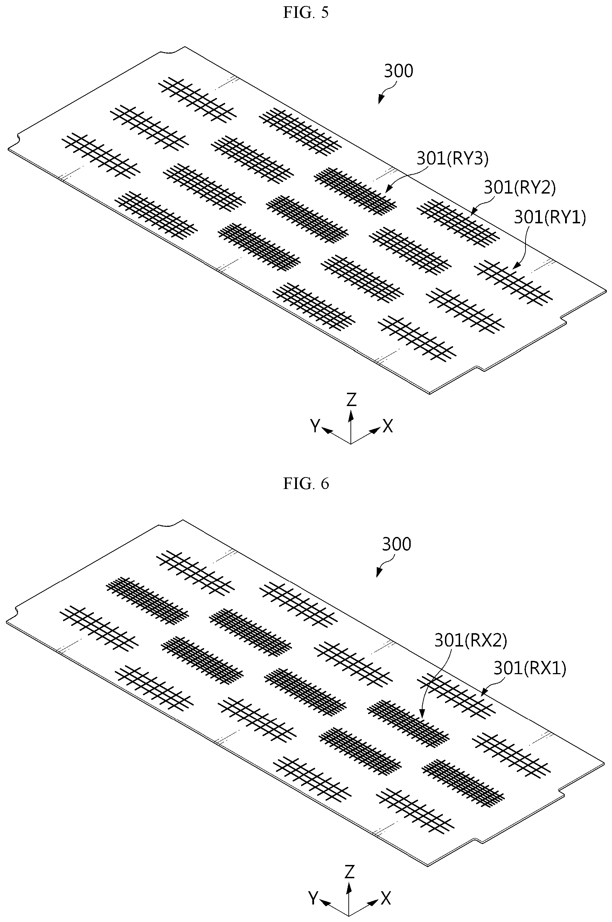

In an embodiment where the inner cover member 300 includes a plurality of inner rupture portions 301, at least some of the rupture portions may have different rupture conditions. This will be described in more detail with additional reference to FIGS. 5 and 6.

FIGS. 5 and 6 are perspective views schematically showing the configuration of an inner cover member 300 according to different embodiments of the present disclosure.

Referring to FIGS. 5 and 6, in an embodiment in which a plurality of inner rupture portions 301 are provided in one inner cover member 300, rupture conditions for two or more inner rupture portions 301 may be configured differently. That is, when a plurality of inner rupture portions 301 are provided in a horizontal direction, at least some of them may rupture under different conditions.

Here, the rupture condition of the inner rupture portion 301 may be set by considering a factor that may rupture the inner rupture portion 301. For example, if the inner rupture portion 301 is ruptured by pressure, the rupture condition may be set based on the magnitude of the pressure. That is, two or more inner rupture portions 301 may be configured to have different rupture pressure conditions. In this case, two or more inner rupture portions 301 may be ruptured at different pressure magnitudes.

Rupture conditions may be set differently for two or more inner rupture portions 301 in various ways. For example, when the inner rupture portion 301 has a plurality of notch lines, as illustrated in FIGS. 5 and 6, the rupture conditions of the inner rupture portions 301 may be configured differently by forming the intervals between the notch lines and/or the number of notch lines differently. In this case, the inner rupture portion 301 in which the intervals between the notch lines are relatively narrow and the number of notch lines is large may be set to have a lower rupture pressure than other inner rupture portions 301.

As another example, if the inner rupture portion 301 is implemented in a notch manner, the notch depths of two or more inner rupture portions 301 may be configured differently. In this case, it may be regarded that the inner rupture portion 301 in which the notch depth is formed relatively deep may be set to have a lower rupture pressure than other inner rupture portions 301.

As another example, the inner rupture portion 301 may be configured to have different rupture conditions by changing the width (horizontal length) of the notch. In this case, the inner rupture portion 301 in which the notch width is formed relatively large may be set to have a lower rupture pressure than other inner rupture portions 301.

In particular, two or more inner rupture portions 301 may be configured to have different rupture conditions in the longitudinal direction of the battery cells 110 and/or the stacking direction of the battery cells 110. For example, the inner cover member 300 illustrated in FIGS. 5 and 6 may be a modified example of the inner cover member 300 illustrated in FIGS. 2 and 3. Accordingly, in the drawings of FIGS. 5 and 6, the X-axis direction may be the stacking direction of the battery cells 110, and the Y-axis direction may be the longitudinal direction of the battery cells 110.

First, referring to FIG. 5, a plurality of inner rupture portions 301, such as RY1, RY2 and RY3, may be spaced apart from each other in the front and rear direction (Y-axis direction), which is the longitudinal direction of the battery cells 110. At this time, the inner rupture portions 301 arranged in the front and rear direction may be configured to rupture under different conditions. For example, the inner rupture portion 301 indicated as RY1, the inner rupture portion 301 indicated as RY2, and the inner rupture portion 301 indicated as RY3 may have notches formed to rupture under different pressure conditions, respectively.

Furthermore, the inner rupture portion 301, which is located relatively at the outer side in the longitudinal direction of the battery cell 110, may be set to have a higher rupture condition than the inner rupture portion 301, which is located relatively at the central side. For example, in the embodiment of FIG. 5, RY1 may be the inner rupture portion 301 located relatively at the outer side compared to RY2. In this case, the inner rupture portion 301 indicated as RY1 may be configured to rupture under a higher pressure condition than the inner rupture portion 301 indicated as RY2. To this end, the interval between the notch lines of RY1 may be formed wider than the interval between the notch lines of RY2. In addition, the number of notch lines of RY1 may be formed less than the number of notch lines of RY2. In addition, since the inner rupture portion 301 indicated as RY2 is located relatively at the outer side than the inner rupture portion 301 indicated as RY3, the rupture condition of RY2 may be formed higher than the rupture condition of RY3. In this case, the interval between the notch lines of RY2 may be wider than the interval between the notch lines of RY3. In addition, the number of notch lines of RY2 may be formed less than the number of notch lines of RY3.

In this embodiment, when a thermal runaway situation occurs at the cell assembly 100, the inner rupture portion 301 located at the center side in the longitudinal direction of the battery cell 110 may be ruptured relatively first. Therefore, in the initial stage of thermal runaway when the amount of venting gas discharged is not large, the venting gas is more likely to be discharged at the center portion than at the outer portion in the longitudinal direction of the battery cell 110. Therefore, according to this embodiment of the present disclosure, the effect of suppressing thermal runaway propagation between the battery modules may be improved. That is, there is a high possibility that other battery modules will be arranged adjacent to the outer portion in the longitudinal direction of the battery cell 110, and in this embodiment, the venting gas may be first discharged at a location as far away as possible from other battery modules.

In particular, at the end in the longitudinal direction of the battery cell 110, there is a high possibility that the electrode terminal 111 of the battery cell 110 and the module terminal electrically connected to the electrode terminal 111 are arranged. In addition, in the portion where the module terminal is located, the module terminals of other battery modules are often arranged adjacent thereto through a bus bar between modules. Therefore, as in this embodiment, if the venting gas is first discharged at the center side in the longitudinal direction of the battery cell 110, the problem of thermal runaway propagation to other adjacent battery modules due to the high-temperature heat of the discharged venting gas may be more reliably prevented.

Next, referring to FIG. 6, a plurality of inner rupture portions 301 may be arranged to be spaced apart from each other in the left and right direction (X-axis direction), which is the stacking directions of the battery cells 110, as indicated by RX1 and RX2. At this time, the inner rupture portions 301 arranged in the left and right direction may be configured to rupture under different conditions. For example, the inner rupture portion 301 indicated by RX1 and the inner rupture portion 301 indicated by RX2 may have notches formed therein to rupture under different pressure conditions, respectively.

Furthermore, the inner rupture portion 301, which is located relatively at the center side in the stacking direction of the battery cells 110, may be set to have a lower rupture condition than the inner rupture portion 301, which is located relatively at the outer side. For example, in the embodiment of FIG. 6, RX2 may be the inner rupture portion 301 located relatively at the center side compared to RX1. In this case, the central inner rupture portion 301 indicated as RX2 may be configured to rupture under a lower pressure condition than the outer inner rupture portion 301 indicated as RX1. To this end, the interval between the notch lines of RX2 and the number of notch lines thereof may be formed narrower and larger than those of RX1.

In this embodiment, when thermal runaway occurs in the cell assembly 100, the inner rupture portion 301 located at the center side in the stacking direction of the battery cells 110 may be ruptured relatively first. Accordingly, the problem of thermal runaway propagation to other battery modules arranged at the outside of the battery module in the stacking direction of the battery cells 110 may be more effectively suppressed.

Meanwhile, in the embodiment of FIGS. 5 and 6, the case where rupture conditions are differently formed in the inner rupture portions 301 by changing the interval and number of notch lines is described. However, as described above, the configuration in which rupture conditions are differently formed may be implemented in various other ways, such as by changing the depth or width of notches.

As another example, the inner rupture portion 301 located relatively at the outer side in the longitudinal direction or stacking direction of the battery cells 110 may be set to have a lower rupture condition than the inner rupture portion 301 located relatively at the central side. For example, in the embodiment of FIG. 6, the inner rupture portion 301 located at the outer side in the stacking direction of the battery cells 110 indicated by RX1 may be set to have a lower rupture condition than another inner rupture portion 301 indicated by RX2, such as by having a narrower interval between notch lines, a greater notch depth, or a greater notch width.

In particular, when the internal pressure of the battery module increases, depending on the shape or material of the module case 200, the central portion of the module case 200, for example the central portion of the top plate 220, may swell the most. In this case, the inner cover member 300 located at the inner side of the top plate 220 also receives the highest pressure at the central portion, so that regardless of the location where thermal runaway occurs in the cell assembly 100, the inner rupture portion 301 located at the central side is likely to rupture first.

For such a battery module, as in this embodiment, by setting the rupture condition of the inner rupture portion 301 located at the outer side to be low, even if the venting gas is emitted at the outermost side of the cell assembly 100, the possibility that the venting gas is immediately discharged by the inner rupture portion 301 at the outer side may increase. Therefore, according to this embodiment of the present disclosure, the venting gas is not intensively discharged at a specific portion (the central portion), but the venting gas may be discharged to the outside as quickly as possible at a location where thermal runaway occurs.

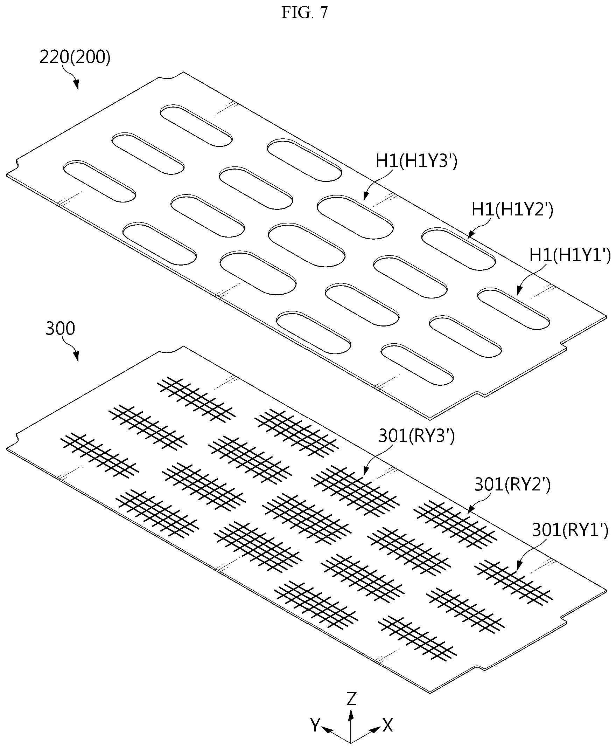

Also, in an embodiment where the inner cover member 300 includes a plurality of inner rupture portions 301, at least some of the inner rupture portions may be configured to have different rupture sizes. This will be described in more detail with additional reference to FIG. 7.

FIG. 7 is an exploded perspective view schematically showing the configuration of an inner cover member 300 and a top plate 220 according to another embodiment of the present disclosure.

Referring to FIG. 7, when a plurality of inner rupture portions 301 are formed in one inner cover member 300, two or more inner rupture portions 301 may be configured to have different rupture sizes, i.e., sizes of portions that are opened in a ruptured state. For example, two or more inner rupture portions 301 may be configured to have different sizes in the horizontal direction (X-axis or Y-axis direction).

Moreover, the inner rupture portion 301 located relatively at the center side may be configured to have a larger rupture size than the inner rupture portion 301 located relatively at the outer side. For example, in the embodiment of FIG. 7, as indicated by RY1', RY2', and RY3', a plurality of inner rupture portions 301 may be arranged in the front and rear direction, i.e., the longitudinal direction of the battery cell 110. At this time, the inner rupture portion 301 relatively closer to the center side may be formed to have a larger size than the inner rupture portion 301 relatively closer to the outer side. As a more specific example, RY2' located relatively at the center side may be formed to have a larger notch area than RY1'. In addition, RY3' located relatively at the center side may be formed to have a larger notch area than RY2'. At this time, the notch area may be made larger by increasing the length of the notch line or increasing the number of notch lines.

According to this embodiment, when a plurality of inner rupture portions 301 are ruptured, the amount of venting gas discharged may be different in parts. In particular, as in the embodiment of FIG. 7, when the rupture size of the inner rupture portion 301 located at the center side is increased, more venting gas may be discharged at the center side rather than the periphery of the top plate 220. Accordingly, the influence of the venting gas on other battery modules adjacent in the horizontal direction may be reduced.

In an embodiment in which the plurality of inner rupture portions 301 are formed with different rupture sizes, the venting holes H1 may also be formed to have different sizes. For example, as illustrated in FIG. 7, a plurality of venting holes H1 may be formed in the top plate 220 arranged at the outer (upper) side of the inner cover member 300 to correspond to the plurality of inner rupture portions 301, respectively. At this time, the plurality of venting holes H1 may be configured with different sizes to correspond to the rupture sizes of the corresponding inner rupture portions 301.

As a more specific example, in the embodiment of FIG. 7, for each of RY1', RY2' and RY3' that are the plurality of inner rupture portions 301 arranged in the longitudinal direction of the battery cell 110, the corresponding venting holes H1 may be H1Y1', H1Y2' and H1Y3'. At this time, if the rupture sizes of RY1', RY2' and RY3' have a relationship such as RY1'<RY2'<RY3', the hole sizes of H1Y1', H1Y2' and H1Y3' may be formed to have a relationship such as H1Y1'<H1Y2'<H1Y3'. In this case, it may be regarded that the size of the venting hole H1 formed at the central side is formed relatively large compared to the size of the venting hole H1 formed at the outer side.

According to this embodiment of the present disclosure, since a plurality of venting holes H1 have different open areas corresponding to the rupture sizes of the corresponding inner rupture portions 301, the technical effect according to the difference in the rupture sizes of the inner rupture portions 301 may be stably guaranteed. In addition, in this case, by preventing the venting hole H1 from being formed unnecessarily large, it is possible to suppress venting gas or foreign substances from flowing in from the outside of the battery module through the venting hole H1.

Meanwhile, in the embodiment of FIG. 7, the configuration in which the rupture sizes are formed differently between the inner rupture portions 301 arranged in the front and rear direction (Y-axis direction) of the battery module has been described, but the rupture sizes may also be formed differently between the inner rupture portions 301 arranged in the left and right direction (X-axis direction) of the battery module. This will not be described in detail again.

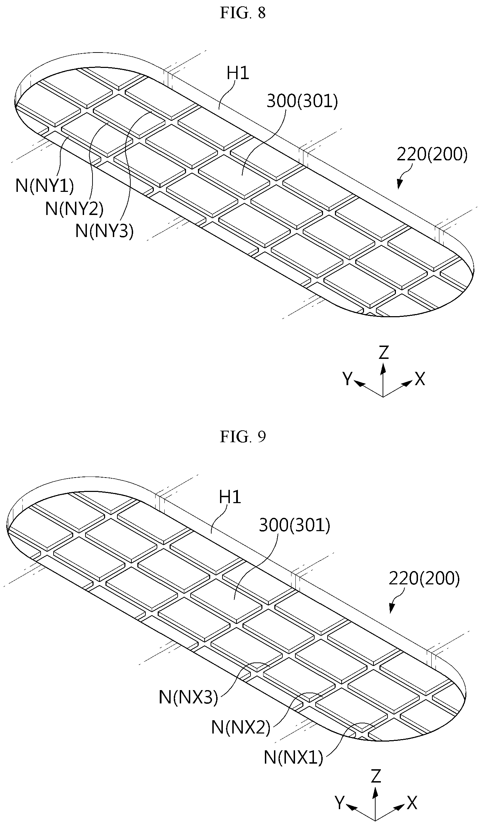

The inner rupture portion 301 may be configured to have different rupture conditions depending on the location. This will be described in more detail with additional reference to FIGS. 8 and 9.

FIGS. 8 and 9 are enlarged perspective views showing a portion in which a venting hole H1 is formed in the battery module according to different embodiments of the present disclosure. For example, FIGS. 8 and 9 may be enlarged views showing a portion A2 of FIG. 1.

As illustrated in FIGS. 8 and 9, one inner rupture portion 301 may be provided at a position corresponding to one venting hole H1. At this time, the inner rupture portion 301 may have a different rupture condition at each position in the portion corresponding to the venting hole H1. That is, within one inner rupture portion 301, the conditions for rupture may be partially designed differently.

First, seeing the embodiment of FIG. 8, one inner rupture portion 301 may have a plurality of notch lines arranged in the left and right direction as indicated by NY1, NY2, and NY3 in a portion exposed to the venting hole H1. At this time, two or more notch lines may have different conditions for rupturing from each other, such as different rupture pressure conditions.

At this time, the rupture condition may be set differently depending on the depth or width of the notch. For example, among the three notch lines NY1, NY2, and NY3 in FIG. 8, at least two notch lines may be configured have different notch depths.

Furthermore, the inner rupture portion 301 may be configured such that the central side of the venting hole H1 has a relatively low rupture condition. For example, in the embodiment of FIG. 8, NY2 may be a notch line located closer to the central side than NY1 or NY3. In this case, the notch line depth or width of NY2 may be formed deeper or larger than the notch line depth or width of NY1 and NY3.

According to this embodiment, in one inner rupture portion 301, the central side of the venting hole H1 may be ruptured more easily. Therefore, since the ruptured part of the inner rupture portion 301 is located at the central side of the venting hole H1, a wide and stable communication area may be secured between the inner rupture portion 301 and the venting hole H1. In this case, the venting gas may be discharged more smoothly through the inner rupture portion 301 and the venting hole H1.

Also, seeing the embodiment of FIG. 9, one inner rupture portion 301 may have a plurality of notch lines arranged in the front and rear direction as indicated by NX1, NX2, and NX3 in a portion exposed by the venting hole H1. Also, at least two of these plurality of notch lines NX1, NX2, and NX3 may have different rupture conditions.

Furthermore, in the embodiment of FIG. 9, the inner rupture portion 301 may be configured such that the central side of the venting hole H1 has a relatively lower rupture condition. For example, NX2 may be a notch line located relatively at the center side compared to NX1, and may be formed to have a deeper or wider notch line than NX1. In addition, NX3 may be a notch line located relatively at the center side compared to NX2, and may be formed to have a deeper or wider notch line than NX2.

In particular, in the embodiment illustrated in FIG. 9, the venting hole H1 is formed to be larger in the Y-axis direction than in the X-axis direction, so that the longitudinal direction of the venting hole H1 may be referred to as the Y-axis direction. At this time, a greater number of notch lines may be formed along the longitudinal direction of the venting hole H1. That is, as illustrated in FIG. 9, the number of notch lines exposed in the venting hole H1 may be greater in the Y-axis direction, which is the longitudinal direction of the venting hole H1, rather than in the X-axis direction.

In this case, the configuration in which a rupture condition is varied between a plurality of notch lines arranged along the longitudinal direction of the venting hole H1 may be more easily and precisely implemented. Furthermore, in such an embodiment, a sufficient gap may be secured between a notch line located at the center side of the venting hole H1 and a notch line located at the outer side of the venting hole H1. Accordingly, the configuration in which a part of one inner rupture portion 301 corresponding to the center side of the venting hole H1 is ruptured more easily may be more easily implemented. Therefore, the ruptured part of the inner rupture portion 301 and the venting hole H1 may be better communicated.

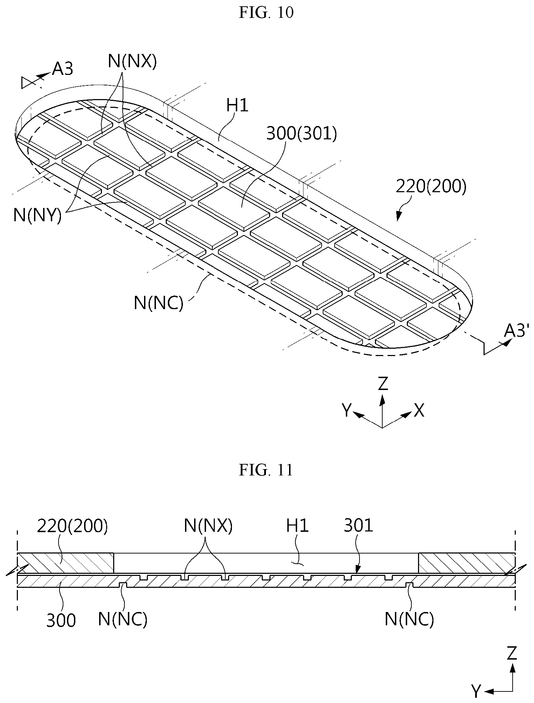

FIG. 10 is an enlarged perspective view showing a portion of a battery module according to still another embodiment of the present disclosure in which a venting hole H1 is formed. For example, FIG. 10 may be regarded as another modification of FIG. 8 or 9. FIG. 11 is a drawing showing a cross-sectional configuration along line A3-A3' of FIG. 10. In the embodiment of FIG. 11, the inner cover member 300 and the top plate 220 are illustrated as being spaced apart from each other in the upper and lower direction (Z-axis direction), but this is only for convenience of illustration, and they may be in close contact with each other.

Referring to FIGS. 10 and 11, the inner rupture portion 301 may have an outer notch line, as indicated by NC. The outer notch line NC may be configured in a ring shape corresponding to the outer peripheral shape of the venting hole H1. For example, when the venting hole H1 is formed in a substantially elliptical shape, the outer notch line NC may be formed in an elliptical ring shape along the perimeter of the venting hole H1. Furthermore, when the inner cover member 300 is positioned at the lower portion of the top plate 220, the outer notch line NC of the inner rupture portion 301 may be positioned directly below or slightly inside the perimeter of the venting hole H1. For example, as in the embodiment of FIG. 11, the outer notch line NC may be positioned inside the venting hole H1 in the horizontal direction (Y-axis direction). In this case, the outer notch line NC of the inner rupture portion 301 may be formed to have a slightly smaller size than the venting hole H1.

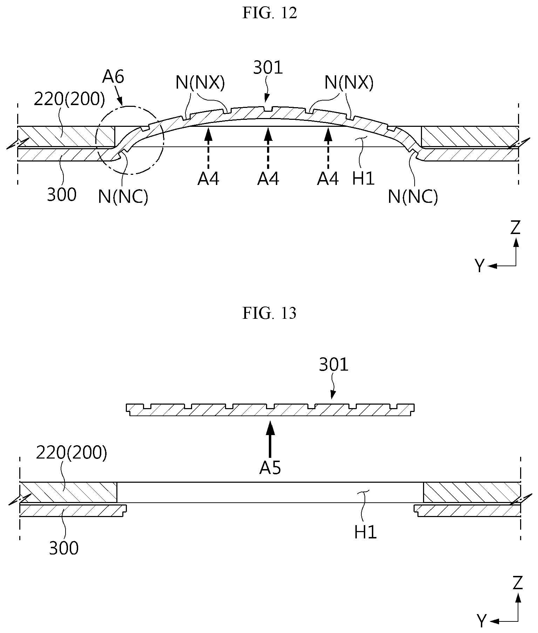

According to this embodiment, a configuration in which the inner rupture portion 301 ruptures along the outer notch line NC may be more easily implemented. This will be described in more detail with reference to the configurations of FIGS. 12 and 13.

FIGS. 12 and 13 are drawings sequentially showing that an inner rupture portion 301 is deformed and ruptured by the pressure of venting gas in the configuration of FIG. 11.

First, referring to FIG. 12, when thermal runaway occurs in the cell assembly 100, as indicated by arrow A4, the venting gas may pressurize the inner cover member 300. In this case, the inner cover member 300 may be deformed such that the inner rupture portion 301 swells upward through the venting hole H1. In particular, since the outer notch line NC of the inner rupture portion 301 is located directly below or further inside the edge of the venting hole H1 in the horizontal direction, the horizontal inner portion of the outer notch line NC may be exposed upward as a whole through the venting hole H1. More specifically, two outer notch lines NC are illustrated in the embodiments of FIGS. 11 and 12, and it may be regarded that the two outer notch lines NC are located inner than the venting hole H1 in the horizontal direction.

At this time, if the deformation of the inner cover member 300 in the upper direction exceeds a certain level, the outer notch line NC may be ruptured. In this case, as illustrated in FIG. 13, the inner rupture portion 301 located at the inner side of the two outer notch lines NC may be separated from the inner cover member 300 and be separated and detached to the outside through the venting hole H1 as indicated by arrow A5. Therefore, due to the rupture of the inner rupture portion 301, the space between the two outer notch lines NC may be opened and communicated with the venting hole H1. In this embodiment, the inner rupture portion 301 formed between the two outer notch lines NC may be easily discharged to the outside of the venting hole H1, so that the ruptured part of the inner rupture portion 301 and the venting hole H1 may be quickly and smoothly communicated.

Meanwhile, in the embodiment of FIG. 13, the inner rupture portion 301 is depicted as being entirely separated from the inner cover member 300, but the inner rupture portion 301 may also be implemented as being only partially separated from the inner cover member 300.

In addition, the inner rupture portion 301 may have a linear notch line extending in one direction, as indicated by NX and NY in FIGS. 10 and 11, together with the outer notch line NC. Here, the linear notch line may extend in the left and right direction (X-axis direction) as indicated by NX, and may extend in the front and rear direction (Y-axis direction) as indicated by NY. Furthermore, the linear notch line may include two or more kinds of notch lines extending in different directions in a form of intersecting each other. In such an embodiment, at least some of the linear notch lines NX and NY may be located inside the outer notch line NC. For example, seeing the embodiment of FIG. 11, a plurality of linear notch lines NX may be located between two outer notch lines NC in the horizontal direction.

According to this embodiment, the rupture configuration of the inner rupture portion 301 may be achieved more smoothly. For example, when the inner rupture portion 301 is deformed by applying the pressure of a venting gas from the inside as indicated by arrow A4 in FIG. 12, the linear notch line NX may cause the inner rupture portion 301 to deform more easily. In particular, the linear notch line NX may be formed on the upper surface of the inner cover member 300. In this case, the inner rupture portion 301 may be bent more easily in the upward direction. Accordingly, the magnitude or acting speed of the force, such as the tensile force, applied to the two outer notch line NC may be increased. Therefore, the outer notch line NC is ruptured more quickly, so that the inner rupture portion 301 may rupture more smoothly and as a result, the venting gas may be discharged more smoothly.

In addition, the outer notch line NC and the notch lines NX, NY arranged therein may be formed to be notched in directions opposite to each other. In particular, the outer notch line NC may be formed on the inner surface of the inner cover member 300 facing the cell assembly 100, and the linear notch lines NX, NY may be formed on the outer surface of the inner cover member 300 facing the module case 200. For example, as illustrated in FIG. 11, the linear notch lines NX, NY may be formed in a groove shape concave in a downward direction on the upper surface of the inner cover member 300, and the outer notch line NC may be formed in a groove shape concave in an upward direction on the lower surface of the inner cover member 300. Since FIG. 10 shows that the upper surface of the inner cover member 300 is exposed through the venting hole H1, the outer notch line NC formed on the lower surface of the inner cover member 300 is indicated as a dotted line, but the outer notch line NC may be formed in a continuously elongated ring shape like an ellipse. Of course, the outer notch line NC may be formed in a ring shape as a whole, but discontinuously. Furthermore, in this case, the outer notch line NC may be formed to penetrate the inner cover member 300.

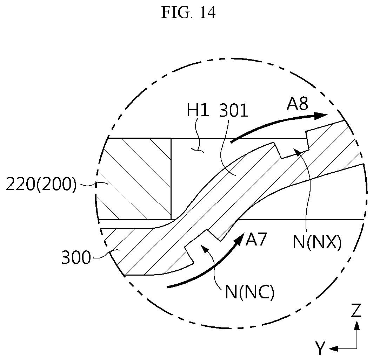

According to this embodiment, the rupture performance of the inner rupture portion 301 may be further improved. This will be described in more detail with reference to FIG. 14.

FIG. 14 is an enlarged view showing a portion A6 of FIG. 12.

Referring to FIGS. 12 and 14, when the inner rupture portion 301 is pressurized by the venting gas, the outer notch line NC may be a point where deformation starts in the inner cover member 300 adjacent to the edge of the venting hole H1. At this time, the outer notch line NC may receive a force that bends approximately in a counterclockwise direction as indicated by arrow A7. Meanwhile, the linear notch line NX located in a portion of the inner cover member 300 that bends upward may receive a force that bends approximately in a clockwise direction as indicated by arrow A8. That is, in one inner rupture portion 301, the outer notch line NC and the linear notch line NX may each receive forces that bend in different directions, that is, in opposite rotational directions.

Therefore, as shown in FIGS. 11 to 14, the outer notch line NC and the linear notch line NX may be formed on opposite surfaces. In particular, the outer notch line NC and the linear notch line NX may be formed on the inner surface and the outer surface of the inner cover member 300, respectively, considering the rotational direction of the tensile force partially applied when the venting gas is pressurized.

According to this embodiment, the inner rupture portion 301 may rupture more quickly. In addition, in this case, the rupture shape of the inner rupture portion 301 may be more easily controlled.

Meanwhile, when the inner rupture portion 301 is provided together with both the outer notch line NC and the linear notch lines NX and NY as in this embodiment, the outer notch line NC may be set to have a lower rupture condition than the linear notch lines NX and NY.

For example, as illustrated in FIG. 12, when the pressure of a venting gas is applied toward the inner rupture portion 301, the inner rupture portion 301 may be configured so that the outer notch line NC ruptures before the linear notch lines NX and NY when the magnitude of the pressure exceeds a certain level. To this end, the outer notch line NC may be configured to have a deeper or wider notch than the linear notch lines NX and NY.

According to this embodiment, as illustrated in FIG. 13, the inner rupture portion 301 may be completely separated from the inner cover member 300 as a whole along the outer notch line NC. Accordingly, the rupture shape of the inner rupture portion 301 may be neat, and a wider rupture area may be secured. In particular, when the outer notch line NC matches the size and shape of the venting hole H1, the communication area between the outer notch line NC and the venting hole H1 may be maximized. Therefore, it may be more advantageous in increasing the discharge performance of the venting gas passing through the inner rupture portion 301.

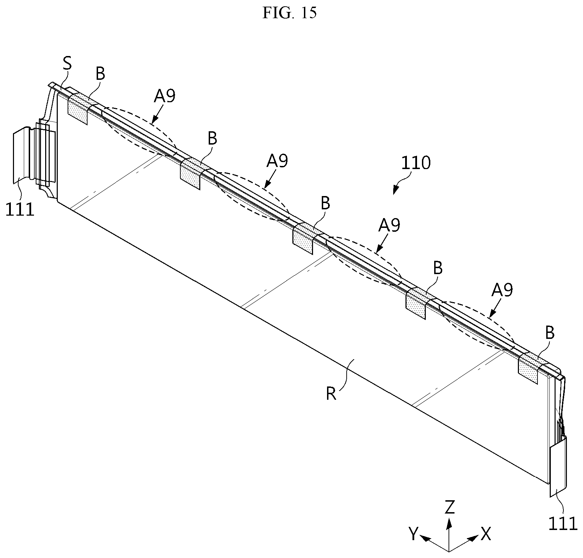

The cell assembly 100 may include a pouch-type cell as a battery cell 110, as illustrated in FIG. 2. This will be described in more detail with reference to FIG. 15.

FIG. 15 is a perspective view schematically showing the configuration of a battery cell 110 equipped in a cell assembly 100 according to an embodiment of the present disclosure.

Referring to FIG. 15, the pouch-type cell is on pouch-type battery, and the battery case may be formed as a pouch exterior. In addition, the pouch-type battery may include an accommodation portion R and a sealing portion S. Here, the accommodation portion R is a portion that accommodates an electrode assembly and an electrolyte, etc. therein. In addition, the sealing portion S may be provided at an edge part of the accommodation portion R and may be a portion to which the pouch exterior is fused. The accommodation portion R of the pouch-type battery may be formed in an approximately rectangular shape. Here, a battery in which the sealing portion S is formed at four sides (corners) of the accommodation portion R is referred to as a four-sided sealing cell, and a battery in which the sealing portion S is formed at three sides (corners) of the accommodation portion R is referred to as a three-sided sealing cell. Although a three-sided sealing cell is illustrated in FIG. 14, the present disclosure is not limited to a specific form of the pouch-type battery.

At least a part of the sealing portion S of the pouch-type cell may be folded in terms of securing space, improving sealing performance, etc. For example, in the embodiment of FIG. 15, the upper sealing portion S of the pouch-type cell where the electrode terminal 111 is not located may be folded toward the accommodation portion R. At this time, a bonding member may be attached to the pouch-type cell, as indicated by B, so as to maintain the folding structure of the sealing portion S. In particular, the bonding member B may be configured in a tape form.

Furthermore, the bonding member B may be partially attached to the sealing portion S. In particular, a plurality of bonding members B may be attached in one sealing portion to be spaced apart from each other in the longitudinal direction of the battery cell 110. For example, in the embodiment of FIG. 15, a plurality of bonding members B may be attached in the top sealing portion of the pouch-type cell to be spaced apart from each other in the Y-axis direction, which is the longitudinal direction of the pouch-type cell. In this case, there may exist a portion in the top sealing portion of the pouch-type cell where the bonding member B is not attached, such as a portion indicated by A9.

In this embodiment, the inner cover member 300 may be disposed to face the outer side of the top sealing portion S of the pouch-type cell. For example, referring to FIG. 2, the cell assembly 100 may be configured in a form in which a plurality of pouch-type cells are stacked in the horizontal direction while being erected in the upper and lower direction. In addition, the inner cover member 300 may be disposed at the upper side of the cell assembly 100.

At this time, at least a part of a portion of the top sealing portion S of the battery cell 110 included in the cell assembly 100, to which the bonding member B is not attached, may be positioned to correspond to the inner rupture portion 301. That is, the inner rupture portion 301 of the inner cover member 300 may be positioned to at least partially face the non-bonding portion A9 in the sealing portion S of the battery cell 110. As a more specific example, when the inner cover member 300 is positioned at the upper side of the cell assembly 100, at least a part of the non-bonding portion A9 may be configured to overlap the inner rupture portion 301 in the horizontal direction. In this case, the non-bonding portion A9 may be positioned below the inner rupture portion 301 in the vertical direction (Z-axis direction). In particular, the inner cover member 300 may include a plurality of inner rupture portions 301, and all of the plurality of inner rupture portions 301 may at least partially overlap with the non-bonding portion A9 of the battery cell 110.

According to this embodiment of the present disclosure, when venting gas is emitted from the battery cell 110, the venting gas may move in the vertical direction (Z-axis direction) toward the inner rupture portion 301. In particular, in the thermal runaway situation of the battery cell 110, the venting gas is likely to be emitted first at the non-bonding portion A9. In the embodiment, since the inner rupture portion 301 may be positioned in the emission direction of the non-bonding portion A9, the pressure of the venting gas applied to the inner rupture portion 301 may be as high as possible. Therefore, the inner rupture portion 301 may rupture more quickly. In addition, after the inner rupture portion 301 is ruptured, the venting gas may be discharged in a straight direction as much as possible through the inner rupture portion 301 and the venting hole H1, so that the venting gas may be discharged more smoothly.

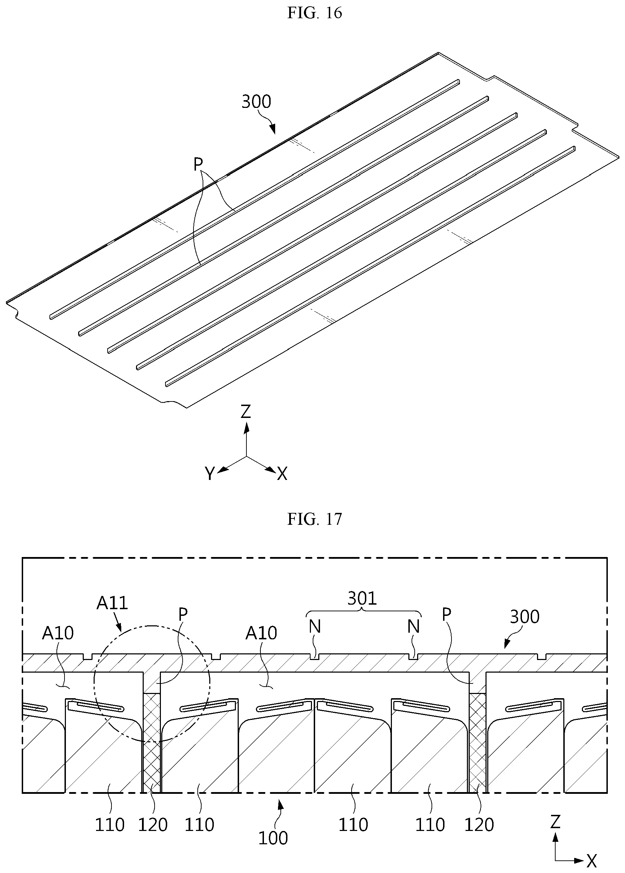

FIG. 16 is a perspective view showing an inner cover member 300 according to another embodiment of the present disclosure, viewed from the lower side. FIG. 17 is a partially enlarged cross-sectional view showing that the inner cover member 300 of FIG. 16 is mounted on an upper part of the cell assembly 100.

Referring to FIGS. 16 and 17, the inner cover member 300 may have a protrusion, as indicated by P. Here, the protrusion P may have a shape that protrudes inwardly toward the cell assembly 100. For example, when the inner cover member 300 is positioned on the upper portion of the cell assembly 100, the protrusion P may be configured to protrude downward from the lower surface of the inner cover member 300.

The protrusion P may be formed to be elongated in one direction, particularly in the horizontal direction, as illustrated in FIG. 16. At this time, the longitudinal direction of the protrusion P may be the same as the longitudinal direction of the battery cell 110. For example, when the battery cell 110 is formed to be elongated in the front and rear direction (Y-axis direction), the protrusion P may also be formed to be elongated in the front and rear direction.

In addition, the protrusion P may be disposed between adjacent battery cells 110 in the stacking direction of the battery cells 110. For example, as illustrated in FIG. 17, when a plurality of battery cells 110 are arranged in a parallel manner in the left and right direction (X-axis direction), the protrusion P may be disposed at the upper side between two adjacent battery cells 110. Furthermore, the protrusion P may be provided in plurality in one inner cover member 300, as illustrated in FIG. 16. In this case, the plurality of protrusions P may be arranged in the upper space between different battery cells 110.

In this embodiment, the protrusion P may block the movement of venting gas or heat between adjacent battery cells 110 or adjacent battery cell groups 110. In particular, as indicated by A10 in FIG. 17, an empty space may be formed between the cell assembly 100 and the inner cover member 300. Also, the venting gas or heat may move through the empty space. However, in this embodiment, the movement of venting gas or heat between adjacent battery cells 110 may be suppressed by the protrusion P. For example, in the embodiment of FIG. 17, when venting gas is discharged from a specific battery cell 110 into the empty space A10 at the upper side, the movement of the venting gas in the stacking direction (X-axis direction) of the battery cells 110 may be minimized by the protrusion P. Therefore, the thermal runaway propagation problem between adjacent battery cells 110 or adjacent cell groups may be suppressed more effectively.

In this embodiment, the inner rupture portion 301 may be positioned between the plurality of protrusions P arranged in the horizontal direction. For example, as illustrated in FIG. 17, a plurality of notches N constituting the inner rupture portion 301 may be formed between two protrusions spaced apart in the X-axis direction. Furthermore, the protrusion P may be configured to divide the space between cells or cell groups in a space between the cell assembly 100 and the lower surface of the inner cover member 300. That is, the protrusion P may function as a partition that divides the outer space between the battery cells 110. At this time, a corresponding inner rupture portion 301 may be provided in the inner cover member 300 for each battery cell 110 or cell group separated by the protrusion P.

According to this embodiment of the present disclosure, venting performance may be stably secured for each battery cell 110 (or cell group) distinguished by the protrusion P, and thermal runaway propagation may also be suppressed more effectively.

In addition, the cell assembly 100 may further include a barrier 120, as illustrated in FIG. 17. The barrier 120 may be directly interposed between adjacent battery cells 110 (or cell groups). In particular, the barrier 120 may be formed in a roughly erected plate form and may be stacked together with the battery cells 110 and included in the cell assembly 100.

Here, the barrier 120 may be a thermal barrier that blocks heat or flames. The thermal barrier may be made of a material having insulation performance or fire resistance, and may play a role of blocking heat or flames between adjacent battery cells 110. For example, the thermal barrier may include a material such as mica or silicone.

Alternatively, the barrier 120 may be a cooling member, such as a cooling fin, interposed between cells to perform cooling. At this time, a cooling path may be formed in the inner space of the barrier 120. Alternatively, a portion or end of the barrier 120 may be configured to be in direct contact with a cooling medium or to be thermally coupled to another cooling configuration through which a cooling medium flows.

Alternatively, the barrier 120 may be configured to be interposed between cells to absorb or cushion swelling or deformation of the battery cell 110. For example, the barrier 120 may be made of an elastic material. In addition, the barrier 120 interposed between the battery cells 110 may be configured in various structures or shapes to have various other purposes or functions.

In an embodiment in which the barrier 120 is included between the battery cells 110, the protrusion P may be configured to be located at the outer side of the barrier 120. For example, referring to FIG. 17, the barrier 120 may be disposed between the cell groups respectively including two battery cells 110. In addition, the protrusion P may be located on the upper side of the barrier 120.

According to this embodiment of the present disclosure, the space above the battery cells 110 (cell groups) separated by the barrier 120 may also be separated by protrusion P. Accordingly, thermal runaway propagation between adjacent battery cells 110 separated by the barrier 120 may be effectively suppressed. Furthermore, when the barrier 120 is a thermal barrier or a cooling member, the adjacent cells may be thermally separated more reliably by the barrier 120 and the protrusion P.

In particular, the protrusion P may be in direct contact with the barrier 120. For example, as indicated by A11 in FIG. 17, the bottom of the protrusion P may be configured to be in contact with the top of the barrier 120. In this case, the space separated by the protrusion P and the barrier 120 may be physically separated more reliably. Accordingly, the movement of venting gas or heat between the battery cells 110 may be effectively prevented, so that the heat transmission prevention effect between adjacent battery cells 110 may be further improved.

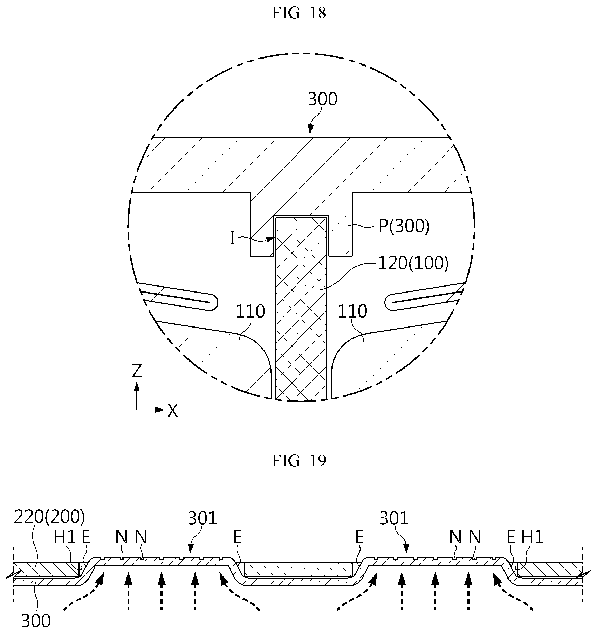

FIG. 18 is an enlarged cross-sectional view showing some components of a battery module according to still another embodiment of the present disclosure. For example, FIG. 18 may be regarded as another modification of the portion A11 of FIG. 17.

Referring to FIG. 18, the end of the barrier 120 may be inserted into the protrusion P. More specifically, an insert groove, such as a portion indicated by I, may be formed in the protrusion P. For example, when the protrusion P is located above the barrier 120, the insert groove I may be formed on the lower surface of the protrusion P. Also, the top of the barrier 120 may be inserted into the insert groove I.

According to this embodiment of the present disclosure, the spatial separation between the protrusion P and the barrier 120 may be more reliably achieved. In particular, in this case, the movement of venting gas, etc. into the gap between the protrusion P and the barrier 120 may be more reliably blocked. In addition, in this case, the coupling strength between the protrusion P and the barrier 120 may be improved. Accordingly, by minimizing movement or detachment of the protrusion P or the barrier 120 even under pressure due to venting gas, flame, etc., the overall structural collapse of the battery module may be reliably prevented. In addition, even if vibration or impact is applied to the battery module in situations such as vehicle operation, the positions of the protrusion P and the barrier 120 may be stably maintained. In addition, due to this, deformation of the position or stacking state of the cell assembly 100 may also be prevented or minimized.

FIG. 19 is a cross-sectional view schematically showing some components of a battery module according to still another embodiment of the present disclosure.

Referring to FIG. 19, the inner cover member 300 may be configured such that the inner rupture portion 301 is positioned at a relatively outer side than other portions. More specifically, in the embodiment of FIG. 19, the inner cover member 300 may be mounted to the lower portion of the top plate 220. At this time, the inner cover member 300 may be configured such that the inner rupture portion 301 protrudes upward relatively rather than other portions. In particular, such a protruding configuration may be implemented in the interior of a normal battery module in which venting gas, etc. is not generated.

Furthermore, the inner cover member 300 and the top plate 220 may be configured to be in close contact with each other, and the inner rupture portion 301 may be disposed to correspond to the venting hole H1. Accordingly, when the inner rupture portion 301 is configured to protrude convexly outward, the inner rupture portion 301 may be inserted into the venting hole H1. In particular, when the degree of protrusion of the inner rupture portion 301 is designed to a certain level or above, the inner rupture portion 301 may protrude outward more than the venting hole H1.

In addition, when the inner rupture portion 301 is configured to protrude from the inner cover member 300, the inner cover member 300 may have an inclined portion at the inner rupture portion 301 or in a region toward the inner rupture portion 301. For example, as in the portion indicated by E in the embodiment of FIG. 19, the inner cover member 300 may have an inclined surface that gets gradually away in the outer direction (+Z-axis direction) toward the inner rupture portion 301.

According to this embodiment of the present disclosure, when venting gas is generated from the cell assembly 100, the venting gas may be directed toward the inner rupture portion 301 more easily as indicated by the dotted arrow in FIG. 19. In particular, in this embodiment, the discharge of the venting gas may be smoothly guided to the inner rupture portion 301 along the inclined portion E of the inner cover member 300. In addition, according to this embodiment, since the space is formed relatively wide near the inner rupture portion 301, the venting gas may be concentrated on the inner rupture portion 301. Therefore, the inner rupture portion 301 may rupture more quickly.

In addition, when the inner rupture portion 301 is inserted into the venting hole H1 as in this embodiment, the assembly position of the inner cover member 300 is guided, so that the assembly efficiency between the inner cover member 300 and the top plate 220 may be improved. In addition, in this case, even after assembly, the coupling property between the inner cover member 300 and the top plate 220 may be improved.

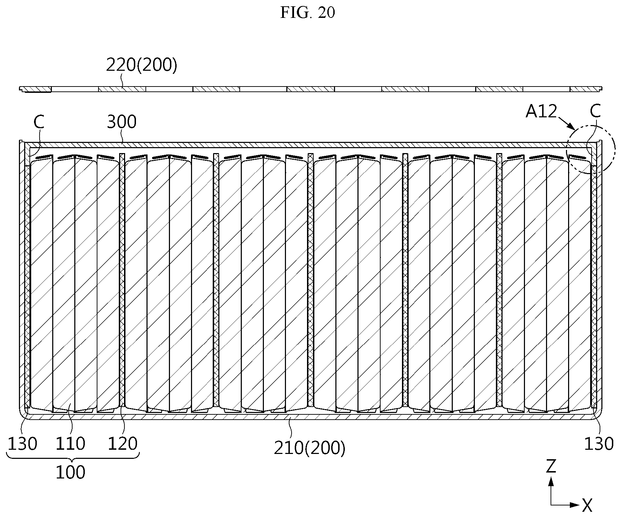

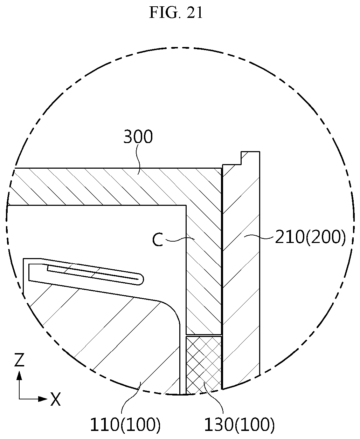

FIG. 20 is a perspective view schematically showing the configuration of a battery module according to still another embodiment of the present disclosure. In FIG. 20, the top plate 220 is shown as being separated from other components. FIG. 21 is an enlarged view showing a portion A12 of FIG. 20.

Referring to FIGS. 20 and 21, the inner cover member 300 may be configured so that the ends are bent, as indicated by C. For example, as illustrated in FIG. 20, the inner cover member 300 may have the left end and the right end bent downward. Also, this end bending configuration, that is, the bending portion C of the inner cover member 300, may be interposed between the cell assembly 100 and the module case 200. For example, referring to FIG. 21, the right end of the inner cover member 300 may be bent downward to provide the right bending portion C. Also, the right bending portion C may be interposed between the right outermost side of the cell assembly 100, for example, the rightmost battery cell 110, and the right plate of the U-frame 210. In addition, in the embodiment of FIG. 20, the bending portion C may also be formed at the left side of the inner cover member 300, and the left bending portion C may be interposed between the left outermost side of the cell assembly 100 and the left plate of the U-frame 210.

According to this embodiment of the present disclosure, the inner cover member 300 may be positioned more stably in the inner space of the module case 200. In particular, even when pressure is applied by venting gas or external vibration or when impact occurs, since the end of the inner cover member 300 is interposed between the cell assembly 100 and the module case 200, displacement or shape deformation may not easily occur.

In addition, according to this embodiment, the leakage of venting gas through the space between the outermost portion of the cell assembly 100 and the module case 200 may be reduced. For example, seeing the embodiment of FIG. 21, the venting gas introduced into the upper space of the right outermost battery cell 110 may be blocked from moving in the right direction toward the module case 200 due to the right bending portion C. Therefore, in this embodiment, the gas leakage suppression effect between the module case 200 (e.g., the side plate of the U-frame 210) and the cell assembly 100 may be further improved.

Meanwhile, the cell assembly 100 may further include an insulation pad 130 at the outermost side of the battery cell 110 in the stacking direction, as illustrated in FIGS. 20 and 21. The insulation pad 130 may be made of a material having electrical insulation properties, such as a polymer, and may be interposed between the cell assembly 100 and the module case 200. In addition, by including a material having elasticity, the insulation pad 130 may be configured to absorb swelling when the battery cell 110 included in the cell assembly 100 swells.

In a configuration in which the insulation pad 130 is included at the outermost side of the cell assembly 100, the bending portion C of the inner cover member 300 may be positioned above the insulation pad 130 in the space between the outermost battery cell 110 of the cell assembly 100 and the side plate of the U-frame 210. That is, when the insulation pad 130 is provided at the outermost side of the cell assembly 100, an empty space corresponding to the thickness of the insulation pad 130 may be formed between the outermost battery cell 110 and the module case 200. At this time, the bending portion C of the inner cover member 300 may be inserted into the empty space.

According to this embodiment of the present disclosure, the coupling property of the inner cover member 300 may be increased, while minimizing the increase in volume of the battery module due to the inner cover member 300. In particular, the end of the bending portion C of the inner cover member 300 may be in contact with the end of the insulation pad 130. For example, in the embodiment of FIG. 21, the lower end of the bending portion C may be in contact with the upper end of the insulation pad 130. In this case, the venting gas may be more effectively prevented from leaking toward the bending portion C of the inner cover member 300.

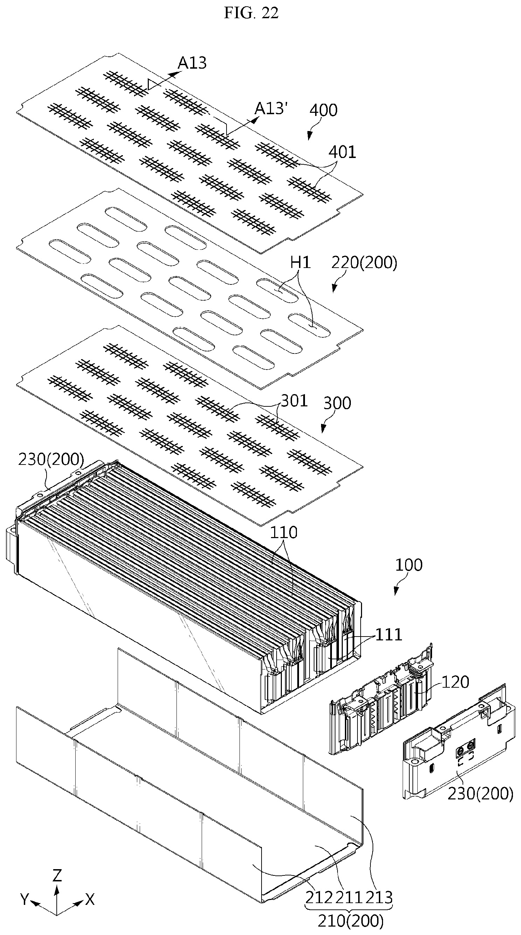

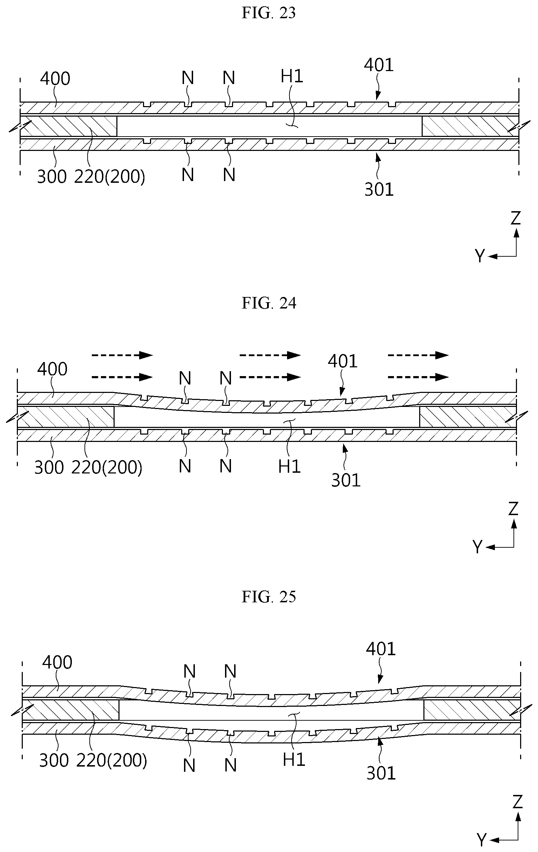

FIG. 22 is an exploded perspective view schematically showing the configuration of a battery module according to still another embodiment of the present disclosure. FIG. 23 is an enlarged cross-sectional view showing a portion where a venting hole H1 is formed, in a state where the battery module of FIG. 22 is coupled. For example, FIG. 23 may be regarded as a cross-sectional view, taken along the line A13-A13', in a state where the battery module of FIG. 22 is coupled.

Referring to FIGS. 22 and 23, the battery module according to the present disclosure may further include an outer cover member 400. The outer cover member 400 may be formed at the outer side of the module case 200. In particular, the outer cover member 400 may be configured to cover a side surface of the module case 200 in which the venting hole H1 is formed, at the outer side. For example, as illustrated in FIGS. 22 and 23, the outer cover member 400 may be configured to be positioned at the upper side of the top plate 220 in which the venting hole H1 is formed, and to cover the upper side of the top plate 220.

The outer cover member 400 may have an outer rupture portion 401. The outer rupture portion 401 may be formed in a shape and configuration identical to or similar to the inner rupture portion 301 of the inner cover member 300. In particular, the outer rupture portion 401 may be formed in a notch shape on the surface of the outer cover member 400. For example, the outer rupture portion 401 may be formed in a downwardly concave shape on the outer surface, for example the upper surface, of the outer cover member 400, as indicated by N in FIG. 23. For the outer rupture portion 401, various embodiments described above with respect to the inner rupture portion 301 may be applied identically or similarly. For example, for the configuration of the outer rupture portion 401, the configuration of the inner rupture portion 301 described in the embodiments of FIGS. 3 to 14 may be applied identically or similarly. Also, the material of the outer cover member 400 may also be the same as or similar to that of the inner cover member 300. For example, the outer cover member 400 may be made of or include a material such as mica, ceramic, or an inorganic material.

The outer rupture portion 401 may be formed at a portion corresponding to the venting hole H1. For example, as illustrated in FIG. 23, the outer rupture portion 401 may be formed above a portion where the venting hole H1 is formed. At this time, the inner rupture portion 301 may be formed below the portion where the venting hole H1 is formed. Accordingly, it may be regarded that the outer rupture portion 401 of the outer cover member 400 and the inner rupture portion 301 of the inner cover member 300 are arranged to face each other with the venting hole H1 interposed therebetween.

In this embodiment, when venting gas flows into the venting hole H1, the outer cover member 400 may be configured to discharge the introduced venting gas to the outside of the module case 200. That is, the outer cover member 400 blocks the venting hole H1 in a normal state, and when the venting gas flows into the venting hole H1 and the pressure increases, the outer rupture portion 401 may rupture to open the venting hole H1 to the outside.

Furthermore, the inner cover member 300 and the outer cover member 400 may be positioned at both sides of the module case 200 in which the venting hole H1 is formed. In this case, when the internal pressure of the module case 200 increases, the inner rupture portion 301 of the inner cover member 300 may rupture first, and then the outer rupture portion 401 of the outer cover member 400 may rupture.

According to this embodiment of the present disclosure, the module case 200 may be more effectively protected from venting gas discharged from another venting hole H1 or another battery module. In particular, the venting gas may have a very high temperature and may contain flames, sparks, high-temperature particles, etc. In this case, the module case 200 may be melted or damaged due to the external high temperature, or the cell assembly 100 therein may be thermally damaged or thermal runaway may occur therein. In addition, the portion of the module case 200 where the venting hole H1 is formed may have weak structural rigidity, and the venting hole H1 may be reversely introduced to damage the inner rupture portion 301. However, in the case where the outer cover member 400 is positioned at the outer side of the module case 200 as in this embodiment, it is possible to effectively prevent the module case 200 or the internal components of the module case 200 from being damaged or thermal runaway from occurring due to the venting gas existing outside the module case 200. Furthermore, according to one embodiment of the present disclosure, since two refractory sheets, namely the inner cover member 300 and the outer cover member 400, are applied to the top and bottom of the top plate 220, respectively, the protective effect against an external high temperature and high pressure environment may be further improved. For example, even if the outer cover member 400 is ruptured due to high temperature and high pressure venting gas, etc. emitted from an adjacent battery module, the inner cover member 300 may still exist at the inner side of the top plate 220. Therefore, the cell assembly inside the top plate 220 may be effectively protected from external venting gas, etc.

In particular, on the side where the venting hole H1 is formed, the inner cover member 300 and the outer cover member 400 may be in close contact with the module case 200. For example, referring to FIG. 23, the outer cover member 400 may be laminated at the upper side and the inner cover member 300 may be laminated at the lower side with the top plate 220 interposed therebetween.

In this embodiment, the outer side (upper side) of the venting hole H1 formed in the top plate 220 may be closed (sealed) by the outer cover member 400, and the inner side (lower side) thereof may be closed (sealed) by the inner cover member 300. In addition, air may be accommodated in the venting hole H1. In this case, it may be regarded that an air insulating layer is formed in the venting hole H1. In addition, due to the air insulating layer, heat transfer between the inside and the outside of the battery module may be reduced. Therefore, the effect of suppressing thermal runaway propagation between the battery modules may be further improved.

For example, due to thermal runaway of another battery module, high-temperature particles may accumulate on the upper surface of the outer cover member 400 of the top plate 220. In this case, the phenomenon that heat from the external high-temperature particles is transferred to the inside of the top plate 220 may be suppressed due to the air insulation layer formed in the venting hole H1 of the top plate 220.

In particular, in this embodiment, except for the portion where the venting hole H1 is formed, the portion between the top plate 220 and the outer cover member 400 and the portion between the top plate 220 and the inner cover member 300 may be adhered to each other. In this case, the air accommodated in the venting hole H1 may be retained only in the venting hole H1.

According to this embodiment, the outer rupture portion 401 and the inner rupture portion 301 may be stably supported at the venting hole H1 due to the air layer. Therefore, deformation or damage caused by the outer rupture portion 401 or the inner rupture portion 301 not being properly supported due to gravity, vibration, external impact, etc., such as deformation in the form of gradual bending toward the venting hole H1, may be reduced. In addition, in this case, when the inner rupture portion 301 is deformed toward the venting hole H1 in a situation where the venting gas is generated and the internal pressure of the module case 200 increases, the outer rupture portion 401 may also be pushed outward and deformed due to the pressure of the air layer. Therefore, the outer rupture portion 401 may be ruptured more quickly in a thermal runaway situation. Accordingly, the venting performance of the battery module may be further improved.

In addition, as in this embodiment, when the outer cover member 400 and the inner cover member 300 and the module case 200 are adhered to each other, it is possible to prevent venting gas and the like from flowing into the gap therebetween. Accordingly, the venting gas flowing into the gap may be directed to other battery cells 110 and the like, thereby suppressing thermal runaway propagation to other battery cells 110.

FIG. 24 is a schematic view showing some components of a battery module according to still another embodiment of the present disclosure. For example, FIG. 24 may be a modification of the embodiment of FIG. 23.

Referring to FIG. 24, the outer rupture portion 401 may be inserted at least partially into the venting hole H1. That is, when the battery module is in a normal state, the outer cover member 400 is attached to the outer side of the module case 200, and the portion where the outer rupture portion 401 is formed may be inserted into the venting hole H1. In this case, it may be regarded that the outer rupture portion 401 is positioned toward the inner side of the battery module rather than other portions of the outer cover member 400. For example, as illustrated in FIG. 24, the outer cover member 400 is attached to the upper surface of the top plate 220, and the outer rupture portion 401 is formed to be concave downwards, so as to be inserted entirely toward the venting hole H1. In this case, it may be regarded that the outer rupture portion 401 is positioned downwards rather than other portions of the outer cover member 400.

According to this embodiment of the present disclosure, due to the insertion configuration of the outer rupture portion 401 into the venting hole H1, the assembly position of the outer cover member 400 is guided, so that the assembly efficiency of the battery module may be improved. In addition, in this case, since the horizontal movement of the outer cover member 400 is suppressed in a state of being attached to the outer side of the module case 200, the coupling property between the outer cover member 400 and the module case 200 may be improved.

In addition, according to this embodiment of the present disclosure, damage to the outer rupture portion 401 by venting gas, etc. flowing at the outside of the battery module may be suppressed. For example, as indicated by the dotted arrow in FIG. 24, when venting gas discharged from another battery module flows in a horizontal direction at the upper side of the battery module, contact of the venting gas with the outer rupture portion 401 may be reduced. Therefore, in this case, the venting gas discharged from another battery module may be more effectively prevented from being reversely introdcuced through the venting hole H1.

FIG. 25 is a schematic view showing some components of a battery module according to still another embodiment of the present disclosure. For example, FIG. 25 may be a modification of the embodiment of FIG. 23.

Referring to FIG. 25, similar to the embodiment of FIG. 24, the outer rupture portion 401 has a shape that is concave inwardly, but unlike the embodiment of FIG. 24, the inner rupture portion 301 may also have a shape that is concave downwards. That is, in a normal battery module state in which thermal runaway does not occur, the inner rupture portion 301 may be formed to be concave downwards in a shape that is approximately parallel to the outer rupture portion 401.

According to this embodiment, the gap between the inner rupture portion 301 and the outer rupture portion 401 may be widened. Accordingly, since an air insulation layer between the inner rupture portion 301 and the outer rupture portion 401 is secured to a certain level or higher, the insulation effect may be secured more sufficiently in the venting hole H1.

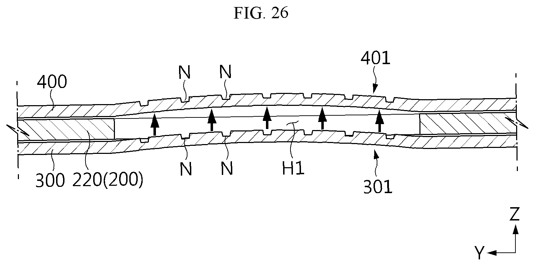

In addition, in this embodiment, the inner rupture portion 301 and the outer rupture portion 401 may be inverted from a concave shape to a convex shape when the internal pressure increases. This will be described in more detail with reference to FIG. 26.

FIG. 26 is a partially enlarged schematic view showing that an inner cover member 300 and an outer cover member 400 are deformed due to an increase in internal pressure in the battery module according to an embodiment of the present disclosure. For example, FIG. 26 may be regarded as showing that the inner cover member 300 and the outer cover member 400 are deformed by venting gas in the embodiment of FIG. 25.

Referring to FIG. 26, when venting gas is generated inside the module case 200, for example at the bottom of the inner cover member 300, and the internal pressure increases, the inner rupture portion 301 of the inner cover member 300 may be reversely deformed from a downwardly curved shape as illustrated in FIG. 25 to an upwardly curved shape as illustrated in FIG. 26.

At this time, the inner rupture portion 301 may be ruptured more quickly due to this inversion deformation. In particular, when a notch as indicated by N is formed in the inner rupture portion 301, the notch opens wider when the inner rupture portion 301 is inverted, so that the rupture speed of the inner rupture portion 301 may be further improved.

In addition, pressure as indicated by a dotted line in FIG. 26 may be applied to the outer rupture portion 401 by the venting gas or the inner rupture portion 301. Also, due to this pressure application, the outer rupture portion 401 may also be reversely deformed from a downwardly curved shape as illustrated in FIG. 25 to an upwardly curved shape as illustrated in FIG. 26. Also, due to this reverse deformation, the outer rupture portion 401 may be ruptured more quickly as the notch or the like is opened.

According to this embodiment, the rupture speed of the outer rupture portion 401 and the inner rupture portion 301 may be further improved. Accordingly, the venting performance of the battery module may be further improved.

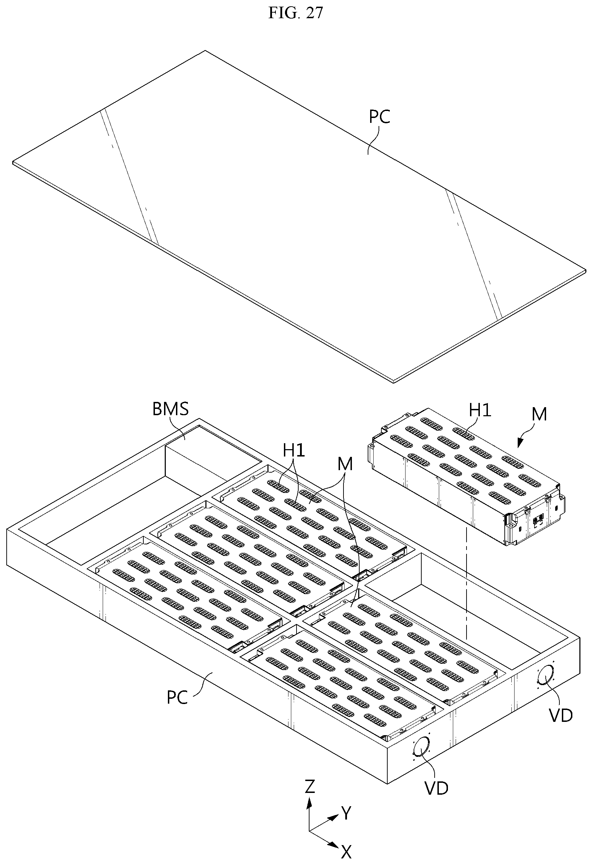

FIG. 27 is a schematic perspective view showing the configuration of a battery pack according to an embodiment of the present disclosure.

Referring to FIG. 27, the battery pack according to the present disclosure may include one or more battery modules according to the present disclosure, as indicated by M. In addition, the battery pack according to the present disclosure may further include various components other than the battery module M according to the present disclosure. For example, the battery pack according to the present disclosure may further include components of the battery pack known at the time of filing of this application, such as a BMS (Battery Management System), a bus bar, a relay, a current sensor, etc.

In addition, the battery pack according to the present disclosure may further include a pack case, as indicated by PC in FIG. 27. The pack case PC may provide a space in which the battery module M according to the present disclosure may be accommodated. In particular, when the battery pack includes a plurality of battery modules M, the pack case PC may have a space partitioned to separately accommodate the plurality of battery modules using a cross beam or the like. In addition, a venting device, as indicated by VD, may be provided on at least one side of the pack case PC of the battery pack according to the present disclosure. The venting device VD may perform a function of discharging venting gas discharged from the venting hole H1 of each battery module from the inside of the pack case PC to the outside. The venting device VD may always be maintained in an open state, or may be configured to be switched from a closed state to an open state in a specific situation, such as when the internal pressure increases.

As another example, the battery pack according to the present disclosure may include the battery module according to the present disclosure, but may not include a separate pack case, and may be configured such that the module case 200 of the battery module functions as the pack case PC. In this case, components of the battery pack such as a BMS, a bus bar, and a relay may be included inside the module case 200. The battery pack of this type is also called a cell-to-pack (CTP) in that the battery cell 110 is directly accommodated in the pack case PC. Recently, the development of a battery pack of this CTP type has also been active, and the present disclosure may be applied to a battery pack of this CTP type. In this case, a venting hole H1 is formed in a case member that is the pack case PC and the module case 200, and the inner cover member 300 may be positioned at the inner side of the case member. In addition, the outer cover member 400 may be positioned at the outer side of the pack case.

The battery module or the battery pack according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Reference Signs]

100: cell assembly
110: battery cell, 111: electrode terminal
120: barrier
130: insulation pad
200: module case
210: U-frame
211: base plate, 212: left plate, 213: right plate
220: top plate
230: end frame
300: inner cover member
301: inner rupture portion
400: outer cover member
401: outer rupture portion
H1: venting hole
N: notch
P: protrusion
C: bending portion

## Claims

1. A battery module, comprising:
a cell assembly having a plurality of battery cells stacked one another;
a module case configured to accommodate the cell assembly in an inner space and having a venting hole formed therein; and
an inner cover member configured to cover a side surface at an inner side of the module case where the venting hole is formed, the inner cover member having an inner rupture portion formed in a part corresponding to the venting hole so that venting gas emitted from the cell assembly is discharged to the venting hole through the inner rupture portion.

2. The battery module according to claim 1,
wherein the venting hole is formed at an upper side of the module case, and
wherein the inner cover member is located at an upper side of the cell assembly.

3. The battery module according to claim 1,
wherein the module case includes a U-frame in which a base plate, a left plate, and a right plate are formed integrally, and a top plate coupled to a top of the U-frame.

4. The battery module according to claim 1,
wherein the inner rupture portion is configured in the form of a notch.

5. The battery module according to claim 1,
wherein the inner rupture portion is formed in plurality.

6. The battery module according to claim 5,
wherein at least some of the plurality of inner rupture portions are configured to have different rupture conditions.

7. The battery module according to claim 1,
wherein the inner rupture portion is configured to have different rupture conditions depending on a location in the part corresponding to the venting hole.

8. The battery module according to claim 1,
wherein the cell assembly includes a pouch-type cell as the battery cell, and
wherein the pouch-type cell is configured so that a bonding member for maintaining a folding structure of a sealing portion is partially attached to the sealing portion and at least a part of a portion where the bonding member is not attached is positioned corresponding to the inner rupture portion.

9. The battery module according to claim 1,
wherein the inner cover member has a protrusion that protrudes toward the cell assembly.

10. The battery module according to claim 1,
wherein the inner cover member is configured so that that the inner rupture portion is positioned relatively in an outer direction.

11. The battery module according to claim 1,
wherein the inner cover member is formed to have a bent end so that a bending portion is interposed between the cell assembly and the module case.

12. The battery module according to claim 1, further comprising:
an outer cover member configured to cover a side surface at an outer side of the module case where the venting hole is formed, the outer cover member having an outer rupture portion provided in the part corresponding to the venting hole.

13. The battery module according to claim 12,
wherein the outer rupture portion is inserted into the venting hole.

14. A battery pack, comprising the battery module according to any one of claims 1 to 13.

15. A vehicle, comprising the battery module according to any one of claims 1 to 13.
